# EUROPÄISCHE PATENTSCHRIFT

(11) **EP 2 646 389 B1**
(45) Veröffentlichungstag und Bekanntmachung des Hinweises auf die Patenterteilung: **27.04.2016**
(21) Anmeldenummer: 11785706.0
(22) Anmeldetag: 23.11.2011
(51) Int. Cl.: C04B 24/26, C04B 103/00, C04B 103/14, C04B 103/52, C04B 28/02, C04B 40/00

(54) **PULVERFÖRMIGER BESCHLEUNIGER**
POWDERED ACCELERATOR
ACCÉLÉRATEUR PULVÉRULENT

(30) Priorität: 29.11.2010 EP 10192923
(43) Veröffentlichungstag der Anmeldung: 09.10.2013
(73) Patentinhaber: Construction Research & Technology GmbH, 83308 Trostberg (DE)
(72) Erfinder: LANGLOTZ, Jutta Karin, 83308 Trostberg (DE); FRIEDRICH, Stefan, 84518 Garching (DE); HESSE, Christoph, 83308 Trostberg (DE)
(86) Internationale Anmeldenummer: PCT/EP2011/070820
(87) Internationale Veröffentlichungsnummer: WO 2012/072466

(56) Entgegenhaltungen:
- WO-A1-02/070425
- WO-A1-2005/090424
- WO-A1-2006/002936
- WO-A1-2010/026155

## Beschreibung

Die vorliegende Erfindung betrifft eine feste Zusammensetzung enthaltend Calcium-Silikat-Hydrat und mindestens ein wasserquellbares Polymer, welches ein Hydrogel ausbilden kann, weiterhin ein Verfahren zu Herstellung der Zusammensetzung, deren Verwendung als Erhärtungsbeschleuniger und die Verwendung als Mahlhilfsmittel bei der Herstellung von Zement. Die Erfindung betrifft auch Baustoffmischungen, welche die Zusammensetzungen enthalten.

Pulverförmige Erhärtungsbeschleuniger für zementäre Baustoffmischungen, welche sich aufgrund ihres festen Aggregatzustands grundsätzlich zum Einsatz in Trockenmörtelmischungen eignen, sind im Stand der Technik bekannt. Beispiele für solche Beschleuniger sind Calciumnitrat, Calciumformiat, Calciumchlorid und Lithiumkarbonat. Ein Nachteil chlorid-, oder nitrathaltiger Beschleuniger sind ihre negativen Auswirkungen auf die Korrosionsbeständigkeit von zum Beispiel stahlarmierten Beton. Aufgrund nationaler Normen bestehen Einsatzbeschränkungen. Ausblühungen auf der Oberfläche von erhärteten Baustoffen können, insbesondere bei Verwendung von Calciumsalzen (zum Beispiel Calciumformiat), ebenfalls ein Problem darstellen.

Bei vielen Anwendungen besteht die Notwendigkeit eine noch größere Beschleunigung des Abbindens und höhere Frühfestigkeiten in zementären Systemen, wie beispielsweise in Mörtel oder Beton, zu erreichen. Die oben genannten Beschleunigertypen und sonstige marktübliche Beschleuniger ermöglichen es aber dem Fachmann derzeit nicht dieses Ziel zu erreichen, auch ist bei den marktüblichen Beschleunigern ein natürlich unerwünschter Verlust von Endfestigkeit zu beobachten, besonders bei höheren Dosierungen. Es besteht also das große Bedürfnis bei vielen Anwendungen höhere Frühfestigkeiten zu erreichen, was mit den derzeit im Stand der Technik bekannten Beschleunigern nicht möglich ist.

Suspensionen von Calciumsilikathydrat (C-S-H) werden seit kurzem als hocheffiziente Beschleuniger in zementhaltigen Baustoffmischungen wie Beton eingesetzt. Sie ermöglichen es deutlich höhere Frühfestigkeiten (6 Stunden) im Vergleich zu den marktüblichen Beschleunigern zu erzielen. Dabei ist im Wesentlichen keine Abnahme der Endfestigkeiten (28 Tage) zu beobachten. Entsprechende Suspensionen werden in der WO 2010026155 A1 beschrieben. WO 2010026155 A1 offenbart ein Verfahren zur Herstellung von Erhärtungsbeschleunigern, bei welchem eine wasserlösliche Calciumkomponente mit einer wasserlöslichen Silikatkomponente in Anwesenheit eines Kammpolymers umgesetzt wird. Es werden auch Polymere zur Erhöhung der Viskosität eingesetzt, wie Polysaccharidderivate und (Co)polymere mit einem durchschnittlichen molekularen Gewicht M_{w} von größer als 500.0000 g/mol, wie beispielsweise Acrylamide und/oder Sulphonsäuren. Wasserquellbare Polymere, welche ein Hydrogel ausbilden können, werden nicht beschrieben. Die Polymere der WO 2010026155 A1 besitzen keine vernetzenden Einheiten. Es ist allerdings aus praktischen Gründen nicht möglich Trockenmörtelmischungen, welche als Bindemittel im wesentlichen Zement enthalten, mit den wasserhaltigen Dispersionen von Calciumsilikathydrat (C-S-H) zu formulieren, da der Wassergehalt zu einer nicht akzeptablen, zumindest teilweisen vorzeitigen Hydratation des Bindemittels führen würde.

WO 02/070425 A1 beschreibt Calcium Silikate Hydrat basierende Erhärtungsbeschleuniger mit einer geringen spezifischen Dichte und deren Verwendung für zementäre Produkte. Es werden unter anderem Methylzellulose, Hydroxyethylzellulose, Hydroxyethylmethylzellulose und Hydroxypropylmethylzellulose (alle Zellulosen sind nicht vernetzt) als Mittel zur Erhöhung der Viskosität eingesetzt, allerdings werden keine wasserquellbaren Polymere, welche Hydrogele ausbilden können beschrieben.

WO2011/131378 A1 wurde am 27.10.11 publiziert und beschreibt die Verwendung bei der Bohrlochzementierung von Calcium- Silikat-Hydrat Suspensionen, welche mindestens ein wasserlösliches, als Fließmittel für hydraulische Binder geeignetes Kammpolymer umfassen.

WO2005/090424 A1 beschreibt polymere Zusammensetzungen und deren Verwendung als Zusatzmittel (insbesondere Wasserretentionsmittel, Stabilisierer und Rheologiemodifizierer) in wässrigen Baustoffsystemen sowie in wasserbasierenden Anstrich- und Beschichtungssystemen. Die polymeren Zusammensetzungen umfassen sulfogruppenhaltige Copolymere und nichtionische Polysaccharid-Derivate wie bspw. Methylcellulose oder Hydroxyethylcellulose.

Auf dem Fachgebiet zementhaltiger Trockenmörtelmischungen besteht ebenso wie für Nichttrockenmörtelanwendungen wie Beton, ein starker Bedarf nach geeigneten, hochwirksamen Beschleunigern, um somit auch in Trockenmörtelsystemen eine deutliche Steigerung der Frühfestigkeiten, vorzugsweise ohne Verluste bei den Endfestigkeiten (Festigkeiten nach 28 Tagen) zu ermöglichen.

Als Aufgabe der vorliegenden Erfindung ergibt sich somit Beschleuniger zur Verfügung zu stellen, welche die vorstehend genannten Nachteile des Stands der Technik überwinden. Insbesondere sollen die Beschleuniger eine effektive Steigerung der Frühfestigkeiten ermöglichen, bei in Trockenmörtelmischungen gleichzeitig guter Verträglichkeit mit wasserempfindlichen, bzw. mit Wasser hydraulisch abbindenden Bindemitteln wie beispielsweise Zement. Insbesondere bevorzugt stellt sich die Aufgabe, dass bei effektiver Steigerung der Frühfestigkeiten die Endfestigkeiten der Baustoffmischungen nicht negativ beeinträchtigt werden.

Die Aufgabe der Erfindung wird gelöst durch eine feste Zusammensetzung enthaltend Calcium-Silikat-Hydrat und mindestens ein wasserquellbares Polymer, welches ein Hydrogel ausbilden kann, weiterhin durch ein Verfahren zur Herstellung der vorstehend genannten festen Zusammensetzungen, wobei folgende Verfahrensschritte
a) In Kontakt bringen einer wässrigen Suspension von Calciumsilikathydrat mit mindestens einem wasserquellbaren Polymer, welches ein Hydrogel ausbilden kann und
b) Trocknen des Produkts aus dem Schritt a) bei Temperaturen unter 140 °C, bevorzugt bei Temperaturen kleiner als 100 °C, insbesondere bevorzugt bei Temperaturen kleiner als 80 °C und am meisten bevorzugt bei Temperaturen zwischen 15 °C und 80 °C, durchgeführt werden.

Auch wird die Aufgabe gelöst durch die Verwendung der Zusammensetzungen als Erhärtungsbeschleuniger in Zement, Hüttensand, Flugasche, Silikastaub, Metakaolin, natürliche Puzzolane, gebrannte Ölschiefer und/oder Calcium-Aluminat-Zement enthaltenden Baustoffmischungen oder in Baustoffmischungen enthaltend Zement und Bindemittel, welche auf Calciumsulfat basieren. Insbesondere bevorzugt sind Baustoffmischungen, die als Bindemittel im wesentlichen Zement enthalten. Ebenfalls wir die Aufgabe gelöst durch die Verwendung der erfindungsgemäßen Zusammensetzungen als Mahlhilfsmittel bei der Herstellung von Zement. Die Aufgabe wird auch gelöst durch Baustoffmischungen enthaltend die erfindungsgemäßen Zusammensetzungen und Zement, Hüttensand, Flugasche, Silikastaub, Metakaolin, natürliche Puzzolane, gebrannte Ölschiefer und/oder Calcium-Aluminat-Zement, oder Baustoffmischungen enthaltend die erfindungsgemäßen Zusammensetzungen, Zement und Bindemittel, welche auf Calciumsulfat basieren.

Die erfindungsgemäße Zusammensetzung liegt im festen Aggregatzustand vor. Die Zusammensetzung ist bevorzugt pulverförmig und bevorzugt als Abbinde- und Aushärtungsbeschleuniger für zementhaltige Bindemittelsysteme geeignet. Bevorzugt sollte der Wasseranteil in der erfindungsgemäßen festen Zusammensetzung kleiner als 15 Gew.-%, besonders bevorzugt kleiner als 10 Gew.-% sein.

Die erfindungsgemäße feste Zusammensetzung ist bevorzugt eine Beschleunigerzusammensetzung. Sie enthält eine anorganische und eine organische Komponente. Die anorganische Komponente kann als modifiziertes, feindisperses Calciumsilikathydrat (C-S-H) angesehen werden, welches Fremdionen wie Magnesium, Aluminium oder Sulfat enthalten kann.

Das Calciumsilikathydrat (als Edukt zur Weiterverarbeitung) kann zunächst in Form einer wässrigen Suspension, bevorzugt in Gegenwart eines Kammpolymer-Fließmittels hergestellt werden, wie in der WO 2010/026155 A1 beschrieben. Bevorzugt können die Suspensionen nach einem Verfahren gemäß einem der Ansprüche 1 bis 14 oder 15 bis 38 der WO 2010/026155 A1 hergestellt werden. Dabei findet bevorzugt die Reaktion einer wasserlöslichen Calciumverbindung mit einer wasserlöslichen Silikatverbindung statt, wobei die Umsetzung der wasserlöslichen Calciumverbindung mit der wasserlöslichen Silikatverbindung in Anwesenheit einer wässrigen Lösung erfolgt, welche ein wasserlösliches, sich als Fließmittel für hydraulische Bindemittel eignendes Kammpolymer enthält.

Üblicherweise wird dabei eine das Calciumsilikathydrat (C-S-H) in feindisperser Form enthaltende Suspension erhalten. Bevorzugt beträgt der Feststoffgehalt der Suspension zwischen 5 und 35 Gew.-%, besonders bevorzugt zwischen 10 und 30 Gew.-%, insbesondere bevorzugt zwischen 15 und 25 Gew.-%.
Die anorganische Komponente Calciumsilikathydrat (C-S-H) kann in den meisten Fällen bezüglich ihrer Zusammensetzung durch die folgende Summenformel beschrieben werden:

a CaO, SiO₂, b Al₂O₃, c H₂O, d X₂O, e WO

X ist ein Alkalimetall
W ist ein Erdalkalimetall, bevorzugt ist W ein Erdalkalimetall, welches sich von Calcium unterscheidet,

| | | |
|---|---|---|
| 0,1 s a ≤ 2 | vorzugsweise | 0,66 ≤ a ≤ 1,8 |
| 0 ≤ b ≤ 1 | vorzugsweise | 0 ≤ b ≤ 0,1 |
| 1 ≤ c ≤ 6 | vorzugsweise | 1 ≤ c ≤ 6,0 |
| 0 ≤ d ≤ 1 | vorzugsweise | 0 ≤ d ≤ 0,4 |
| 0 ≤ e ≤ 2 | vorzugsweise | 0 ≤ e ≤ 0,1 |

Besonders bevorzugt sind die Molverhältnisse so gewählt, dass in der obigen Summenformel die bevorzugten Bereiche für a, b und e erfüllt sind (0,66 ≤ a ≤ 1,8; 0 ≤ b ≤ 0.1; 0 ≤; e ≤ 0,1).

Vorzugsweise liegt das Calcium-Silikat-Hydrat in den erfindungsgemäßen Zusammensetzungen in Form von Foshagit, Hillebrandit, Xonotlit, Nekoit, Clinotobermorit, 9Å - Tobermorit (Riversiderit), 11Å - Tobermorit, 14 Å- Tobermorit (Plombierit), Jennit, Metajennit, Calcium Chondrodit, Afwillit, α - C₂SH, Dellait, Jaffeit, Rosenhahnit, Killalait und/oder Suolunit vor, besonders bevorzugt als Xonotlit, 9Å-Tobermorit (Riversiderit), 11Å- Tobermorit, 14 Å - Tobermorit (Plombierit), Jennit, Metajennit, Afwillit und/oder Jaffeit. Bevorzugt beträgt das molare Verhältnis von Calcium zu Silicium im Calcium-Silikat-Hydrat von 0,6 bis 2 und besonders bevorzugt von 1,0 bis 1,8. Das molare Verhältnis von Calcium zu Wasser im Calciumsilikathydrat beträgt vorzugsweise 0,6 bis 6, besonders bevorzugt 0,6 bis 2 und insbesondere bevorzugt 0,8 bis 2.

Bevorzugt ist die Partikelgröße des Calciumsilikathydrats (C-S-H) in den erfindungsgemäßen festen Zusammensetzungen kleiner als 1.000 nm, besonders bevorzugt kleiner als 500 nm und insbesondere bevorzugt kleiner als 200 nm, gemessen durch Lichtstreuung mit dem Gerät ZetaSizer Nano der Firma Malvern.

Die organische Komponente der Zusammensetzung stellt mindestens ein wasserquellbares Polymer dar, welches ein Hydrogel ausbilden kann. Hydrogele sind definiert als ein Wasser enthaltendes, aber wasserunlösliches Polymer, dessen Moleküle chemisch, zum Beispiel durch kovalente oder ionische Bindungen, oder physikalisch, z. B. durch Verschlaufen der Polymerketten, zu einem dreidimensionalen Netzwerk verknüpft sind. Eine Verknüpfung über kovalente Bindungen zur Ausbildung eines dreidimensionalen Netzwerks ist dabei bevorzugt. Durch eingebaute hydrophile Polymerkomponenten quellen sie in Wasser unter beträchtlicher Volumenzunahme, ohne aber ihren stofflichen Zusammenhalt zu verlieren. Dabei nehmen sie beträchtliche Mengen an Wasser auf. In der vorliegenden Erfindung stellen die wasserquellbaren Polymere, welche ein Hydrogel ausbilden können, die getrockneten Vorstufen der Hydrogele dar. Die wasserquellbaren Polymere, welche ein Hydrogel ausbilden können, werden auch Superabsorber genannt. Sie können bei Kontakt mit Wasser dieses bis zu einem Vielfachen des eigenen Gewichts aufnehmen. Die Bestimmung der Aufnähmekapazität der erfindungsgemäßen wasserquellbaren Polymere, welche ein Hydrogel ausbilden können, erfolgt gemäß der für die Hygieneindustrie entwickelten Norm edana 441.2-02 unter folgender Abwandlung der Norm. Es wird bei dem Test an Stelle einer 0.9 % wässrigen NaCl-Lösung eine 1 % wässrige Lösung von Calciumformiat eingesetzt. Diese auch "Teebeuteltest" genannte Methode wird ausgeführt, indem man eine definierte Menge (etwa 200 mg) superabsorbierendes Polymer in einen Teebeutel einschweißt und 30 Minuten in die 1 % wässrige Lösung von Calciumformiat eintaucht. Anschließend lässt man die Teebeutel fünf Minuten lang abtropfen und wiegt sie aus. Ein Teebeutel ohne superabsorbierendes Polymer wird als Blindwert mitgeprüft. Zur Berechnung der Aufnahmekapazität verwendet man folgende Formel: Aufnahmekapazität = (Auswaage - Blindwert - Einwaage) / Einwaage (g/g) Bevorzugt beträgt die nach der Norm edana 441.2-02 unter Einsatz einer 1 % wässrigen Lösung von Calciumformiat geprüfte Aufnahmekapazität der erfindungsgemäßen wasserquellbaren Polymere, welche ein Hydrogel ausbilden können, mehr als 5g/g besonders bevorzugt mehr als 15 g/g und insbesondere bevorzugt mehr als 20 g/g. Die wasserquellbaren Polymere, welche ein Hydrogel ausbilden können, sind bevorzugt vernetzte hydrophile Polymere. Beispiele für erfindungsgemäße wasserquellbare Polymere, welche ein Hydrogel ausbilden können, sind unter anderem α ) anionische vernetzte Polyelektrolyte, β ) kationische vernetzte Polyelektrolyte, γ ) ampholytische vernetzte Polyelektrolyte und/oder δ ) nichtionische vernetzte Polymere, bevorzugt nichtionische vernetzte Polymere aus radikalischer Polymerisation. Es können eine oder mehrere der vorstehend genannten Alternativen an wasserquellbaren Polymeren, welche ein Hydrogel ausbilden können, zum Einsatz kommen. Diese Alternativen werden bei den weiteren bevorzugten Ausführungsformen weiter im Detail erläutert.

Innerhalb der Gruppe der Polyelektrolyte, insbesondere der α ) anionischen, vernetzten Polyelektrolyte und der γ ) ampholytischen vernetzten Polyelektrolyte weniger bevorzugt sind wasserquellbare Polymere, die auf vernetzten Polycarboxylaten basieren, insbesondere auf reinen Polycarboxylaten oder auf Polymeren mit einem sehr hohen Polycarboxylatanteil, da deren Wasseraufnahmefähigkeit in stark ionischen Lösungen (wie in Baustoffmischungen meist der Fall) nur relativ schwach ist. Solche Polymere kommen beispielsweise in der Hygieneindustrie zum Einsatz.

In vorliegender Erfindung ist es vorteilhaft, solche Superabsorber zu verwenden, die auch bei hohen Salzkonzentrationen, insbesondere hohen Calciumionenkonzentrationen wie sie üblicher Weise in zementären wässrigen Systemen vorliegen, ein hohes Wasserabsorptionsvermögen aufweisen. Bevorzugt sind also ionische wasserquellbare Polymere, welche ein Hydrogel ausbilden können, insbesondere α ) anionische, vernetzte Polyelektrolyte, β ) kationische vernetzte Polyelektrolyte und/oder γ ) ampholytische vernetzte Polyelektrolyte.

Es können auch δ ) nichtionische vernetzte Copolymere eingesetzt werden, die ein niedrigeres Wasserabsorptionsvermögen aufweisen, welches allerdings von der Salzfracht nahezu unbeeinflusst ist.

Die wasserquellbaren Polymere, welche ein Hydrogel ausbilden können, dürften bei in Kontakt bringen mit einer wässrigen Suspension feinteiligen Calciumsilikathydrats (C-S-H) das Calciumsilikathydrat in das dreidimensionale Netzwerk mit aufnehmen. Beim Trocknen des so entstandenen Hydrogels wird vermutlich das dreidimensionale Polymernetzwerk die Calciumsilikathydrat-Feinpartikel so umschließen, dass eine gewisse Abschirmung gegenüber anderen Calciumsilikathydrat-Partikeln erfolgt. Somit kann eine Agglomeration der Feinpartikel beim Trocknen weitgehend verhindert werden. Es ist davon auszugehen, dass der beim Trocknungsprozess stabilisierende Effekt der erfindungsgemäßen wasserquellbaren Polymere auf vorhergehend geschildertem Sachverhalt beruht. Trocknungsversuche (zum Vergleich) von feinteiligem Calciumsilikathydrat (C-S-H) ohne einen Stabilisator oder unter Zusatz nicht erfindungsgemäßer Stoffe ergaben weniger wirksame Beschleuniger. Dies wird auf eine Agglomeration der Calciumsilikathydrat (C-S-H) Teilchen in Abwesenheit des erfindungsgemäßen Stabilisators zurückgeführt. Erst durch den Einsatz wasserquellbarer Polymere, welche ein Hydrogel ausbilden können, wurde es möglich die in der wässrigen Suspension weitgehend stabilen, feinteiligen Calciumsilikathydrat-Partikel auch beim Trocknen so zu stabilisieren, dass diese in den festen Aggregatzustand ohne wesentlichen Verlust an Wirksamkeit (als Beschleuniger) überführt werden können.

Bevorzugt sind feste Zusammensetzungen enthaltend Calciumsilikathydrat und mindestens ein wasserquellbares Polymer, welches ein Hydrogel ausbilden kann, wobei das Calciumsilikathydrat nicht aus einer Hydratationsreaktion von (Portland)zement mit Wasser stammt.

Bevorzugt sind feste Zusammensetzungen enthaltend Calciumsilikathydrat und mindestens ein wasserquellbares Polymer, welches ein Hydrogel ausbilden kann, wobei die feste Zusammensetzung keinen (Portland)zement enthält. Besonders bevorzugt sind feste Zusammensetzungen enthaltend Calciumsilikathydrat und mindestens ein wasserquellbares Polymer, welches ein Hydrogel ausbilden kann, wobei die feste Zusammensetzung keinen (Portland)zement enthält, der mit Wasser in Berührung gekommen ist. Unter (Portland)zement, der mit Wasser in Berührung gekommen ist, sollen dabei auch inzwischen getrocknete Mischungen von (Portland)zement und Wasser verstanden werden, welche einen bevorzugt geringen Wasseranteil enthalten können.

Bevorzugte Ausführungsformen der wasserquellbaren Polymere sind in den abhängigen Ansprüchen genannt und werden im Folgenden erläutert.
In einer bevorzugten Ausführungsform der Erfindung beträgt das Gewichtsverhältnis des wasserquellbaren Polymers, welches ein Hydrogel ausbilden kann, zum Calciumsilikathydrat von 1:10 bis 3:1, besonders bevorzugt von 1:5 bis 2:1. Bei Einsatz von weniger wasserquellbarem Polymer als es dem vorgenannten Gewichtsverhältnis entspricht, wird die Stabilisierungswirkung der wasserquellbaren Polymere beim Trocknen zu schwach und die Effizienz als Beschleuniger der Zusammensetzungen im festen Aggregatzustand lässt nach. Noch größere Mengen an Stabilisator bewirken keine wesentliche weitere Verbesserung bei der Wirksamkeit der Beschleuniger, die Wirtschaftlichkeit der Zusammensetzungen ist kaum mehr gegeben.

Bevorzugt sind Zusammensetzungen, bei denen das wasserquellbare Polymer, welches ein Hydrogel ausbilden kann, ausgewählt ist aus der Gruppe
a ) anionischer vernetzter Polyelektrolyte,
β ) kationischer vernetzter Polyelektrolyte,
γ ) ampholytischer vernetzter Polyelektrolyte und/oder
δ ) nichtionischer vernetzter Polymere, bevorzugt nichtionischer vernetzter Polymere aus radikalischer Polymerisation.

Der Begriff "vernetzt" bedeutet dabei bevorzugt, dass mindestens eine Vernetzergruppe in den jeweiligen wasserquellbaren Polymeren vorhanden ist, welche eine, bevorzugt kovalente, Bindungsverknüpfung zwischen mindestens zwei Polymerbestandteilen, die sich von der Vernetzergruppe unterscheiden, bewirken. Die Bindungsverknüpfung zwischen den Polymerbestandteilen durch die Vernetzergruppe bevorzugt so ausgestaltet, dass an den Bindungsverknüpfungen bevorzugt eine Verzweigung vorliegt. Der Begriff " vernetzt" bedeutet besonders bevorzugt, dass mehr als eine Vernetzergruppe in den jeweiligen wasserquellbaren Polymeren vorhanden sind, welche mehrere, bevorzugt kovalente Bindungsverknüpfungen zwischen Polymerbestandteilen, die sich von der Vemetzergruppe unterscheiden, bewirken.

Insbesondere bevorzugt sind vernetzende Struktureinheiten, die sich von Monomeren ableiten, welche mehrfach ethylenisch ungesättigte Vinylgruppen aufweisen. Diese können beispielsweise zusammen mit radikalisch polymerisierbaren, nur eine ethylenisch ungesättigte Vinylgruppe aufweisenden Monomeren in einer radikalischen (Co)polymerisation zu den jeweiligen wasserquellbaren Polymeren umgesetzt werden.

Die Alternative α ) der anionischen vernetzten Polyelektrolyte umfasst Polymere welche als anionische Gruppen bevorzugt Sulfonate, Sulfate, Phosphate und/oder Phosphite enthalten. Sulfonate sind als anionische Gruppe besonders bevorzugt. Weniger bevorzugt sind Polymere mit einem sehr hohen Anteil an Carboxylatgruppen. Carboxylate sind weniger bevorzugt, weil sie in stark ionenhaltigen, insbesondere calciumhaltigen, wässrigen Systemen keine starke Wasserabsorption und Wirksamkeit als Superabsorber entwickeln können. Der Anteil von Carboxylatgruppen bezogen auf die Gesamtmenge aller anionischen Gruppen beträgt bevorzugt weniger als 40 mol %.

Die Alternative β ) der kationischen vernetzten Polyelektrolyte umfasst Polymere welche als kationische Gruppen bevorzugt quartäre Ammoniumsalze aufweisen.

Die Alternative γ ) ampholytischer vernetzter Polyelektrolyte umfasst Polymere, welche sowohl anionische Gruppen enthalten, bevorzugt die vorstehend unter α ) genannten anionischen Gruppen, als auch kationische Gruppen enthalten, bevorzugt die vorstehend unter β ) genannten kationischen Gruppen. Das Verhältnis der Anzahl von anionischen zu kationischen Gruppen beträgt bevorzugt zwischen 95:5 und 5:95, besonders bevorzugt zwischen 80:20 und 20:80.

Bevorzugt werden die α ) anionischen vernetzten Polyelektrolyte, β ) kationischen vernetzten Polyelektrolyte und γ ) ampholytischen vernetzten Polyelektrolyte aus radikalischer Polymerisation erhalten.

Die Alternative δ ) nichtionischer vernetzter Polymere, umfasst nichtionische Polymere. Bevorzugt sind diese Polymere hydrophil, um trotz des Fehlens von Ladungen eine ausreichende Wasseraufnahmefähigkeit zu erreichen. Bevorzugt werden die nichtionischen vernetzten Polymere aus radikalischer Polymerisation erhalten.

Wenn die a ) anionischen vernetzten Polyelektrolyte, β ) kationischen vernetzten Polyelektrolyte, γ ) ampholytischen vernetzten Polyelektrolyte oder δ ) nichtionischen vernetzten Polymere aus radikalischer Polymerisation erhalten werden, kommen bevorzugt Monomere, welche eine Vernetzung zu einem dreidimensionalen Netzwerk bewirken, zum Einsatz. Vorzugsweise weisen die vernetzenden Monomere mehrfach ethylenisch ungesättigte Vinylgruppen auf, welche zur radikalischen Polymerisation geeignet sind. Eine detaillierte Beschreibung der vernetzenden Monomere erfolgt bei der Beschreibung weiterer bevorzugter Ausführungsformen der Erfindung.

Bevorzugt werden sowohl die anionischen, die kationischen, die ampholytischen vernetzten Polyelektrolyte, als auch die nichtionischen vernetzten Polymere durch radikalische Polymerisation entsprechend geladener oder ungeladener Monomere erzeugt. Bei der anionischen und der kationischen Variante kommen dabei nur die entsprechend geladenen Monomere zum Einsatz, bei den ampholytischen Polyelektrolyten sowohl anionische als auch kationische Monomere. Bei den nichtionischen vernetzten Polymeren kommen ungeladene Monomere zum Einsatz. Allerdings sind nichtionische, also neutrale Monomere bei allen drei Alternativen a ), β ) und γ ) nicht ausgeschlossen.

Bevorzugt enthalten die Polymere der Alternative α ) Struktureinheiten, die sich von anionischen Monomeren ableiten, insbesondere bevorzugt von Sulfonaten. Bevorzugt enthalten die Polymere der Alternative α ) Struktureinheiten, die sich von anionischen Monomeren, bevorzugt von Sulfonaten, ableiten, in einer Menge von 5 bis 99,99 mol %, besonders bevorzugt 20 bis 80 mol %, bezogen auf die Summe aller Monomere.

Bevorzugt enthalten die Polymere der Alternative β ) Struktureinheiten, die sich von kationischen Monomeren ableiten, in einer Menge von 5 bis 99,99 mol %, besonders bevorzugt 20 bis 80 mol %, bezogen auf die Summe aller Monomere.

Bei den γ ) ampholytischen vernetzten Polyelektrolyten ist bevorzugt die Summe aus Struktureinheiten, die sich von anionischen und kationischen Monomeren ableiten, bezogen auf die Summe aller Monomere größer als 5 mol %, besonders bevorzugt größer als 20 mol %. Das Verhältnis von Struktureinheiten, die sich von anionischen Monomeren ableiten zu Struktureinheiten, die sich von kationischen Monomeren ableiten, beträgt vorzugsweise von 95:5 bis 5:95, besonders bevorzugt von 80:20 bis 20: 80.

Die Herstellung der erfindungsgemäßen wasserquellbaren Polymere kann in an sich bekannter Weise durch Verknüpfung der die jeweiligen Struktureinheiten bildenden Monomere durch radikalische Polymerisation erfolgen. Alle als Säure vorliegenden Monomere können als freie Säuren oder in deren Salzform polymerisiert werden. Ferner kann die Neutralisation der Säuren durch Zugabe entsprechender Basen auch nach der Copolymerisation erfolgen, eine Teilneutralisation vor oder nach der Polymerisation ist ebenfalls möglich. Die Neutralisation der Monomere, bzw. der Copolymere kann beispielsweise mit den Basen Natrium-, Kalium-, Calcium-, Magnesiumhydroxid und/oder Ammoniak erfolgen. Ebenfalls als Basen geeignet sind primäre, sekundäre oder tertiäre, jeweils verzweigte oder unverzweigte Alkylgruppen aufweisende C₁-bis C₂₀-Alkylamine, C₁- bis C₂₀-Alkanolamine, C₅- bis C₈-Cycloalkylamine und/oder C₆-bis C₁₄-Arylamine. Es können eine oder mehrere Basen eingesetzt werden. Bevorzugt ist die Neutralisation mit Alkalimetallhydroxiden und/oder Ammoniak, besonders bevorzugt ist Natriumhydroxid. Die anorganischen oder organischen Basen sollen so ausgewählt werden, dass sie mit der jeweiligen Säure relativ gut wasserlösliche Salze bilden.

Die Copolymerisation der Monomere erfolgt bevorzugt durch radikalische Substanz-, Lösungs-, Gel-, Emulsions-, Dispersions- oder Suspensionspolymerisation. Da es sich bei den erfindungsgemäßen Produkten um hydrophile, in Wasser quellbare Copolymere handelt, ist die Polymerisation in wässriger Phase, die Polymerisation in umgekehrter Emulsion, bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln.

Die Herstellung des superabsorbierenden Polymers kann in einer besonders bevorzugten Ausführungsform als adiabatische Polymerisation durchgeführt und sowohl mit einem Redox-Initiatorsystem als auch mit einem Photoinitiator gestartet werden. Außerdem ist eine Kombination von beiden Startvarianten möglich. Das Redox-Initiatorsystem besteht aus mindestens zwei Komponenten, einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxid, Butylhydroperoxid oder Persäuren wie Peressigsäure. Daneben können aber auch andere Oxidationsmittel eingesetzt werden, zum Beispiel Kaliumpermanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (zum Beispiel Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze möglich [Kupfer(I); Mangan(II); Eisen(II)]. Auch Phosphorverbindungen können verwendet werden, zum Beispiel Natriumhypophosphit.

Im Falle einer Photopolymerisation wird diese mit UV-Licht gestartet, welches den Zerfall eines Photoinitiators bewirkt. Als Photoinitiator können zum Beispiel Benzoin und Benzoinderivate, wie Benzoinether, Benzil und seine Derivate, wie Benzilketale, Aryldiazoniumsalze, Azoinitiatoren wie z.B. 2,2'-Azobis(isobutyronitril), 2,2'-Azobis(2-amidinopropan)hydrochlorid und/oder Acetophenonderivate verwendet werden.
Der Gewichtsanteil der oxidierenden und der reduzierenden Komponente im Falle der Redox-Initiatorsysteme liegt bevorzugt jeweils im Bereich zwischen 0,00005 und 0,5 Gew.-%, besonders bevorzugt jeweils zwischen 0,001 und 0,1 Gew.-%. Für Photoinitiatoren liegt dieser Bereich bevorzugt zwischen 0,001 und 0,1 Gew.-%, besonders bevorzugt zwischen 0,002 und 0,05 Gew.-%. Die genannten Gew.-%-Angaben für oxidierende und reduzierende Komponente und Photoinitiatoren beziehen sich dabei jeweils auf die Masse der zur Copolymerisation eingesetzten Monomere.

Die Copolymerisation wird bevorzugt in wässriger Lösung, bevorzugt in konzentrierter wässriger Lösung diskontinuierlich in einem Polymerisationsgefäß (Batchverfahren) oder kontinuierlich nach der in der US-A-4857610 beschriebenen endlosen Band" Methode durchgeführt. Eine weitere Möglichkeit ist die Polymerisation in einem kontinuierlich oder diskontinuierlich betriebenen Knetreaktor. Der Prozess wird üblicherweise bei einer Temperatur zwischen -20 und 20 °C, bevorzugt zwischen -10 und 10 °C gestartet und bei Atmosphärendruck ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt in der Regel eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen.

In einer weiteren bevorzugten Ausführungsform erfolgt die Copolymerisation als inverse Suspensionspolymerisation der wässrigen Monomerphase in einem organischen Lösemittel. Hierbei wird bevorzugt so verfahren, dass man das in Wasser gelöste und gegebenenfalls neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 5 Gew.-%, bevorzugt 0,1 bis 3 Gew.-%, bezogen auf die Monomere, verwendet werden. Die W/O-Emulgatoren und Schutzkolloide werden auch als Stabilisatoren bezeichnet. Es können übliche, in der inversen Suspensionspolymerisationstechnik als Stabilisatoren bekannte Verbindungen wie Hydroxypropylcellulose, Ethylcellulose, Methylcellulose, Celluloseacetatbutyratmischether, Copolymere aus Ethylen und Vinylacetat, aus Styrol und Butylacrylat, Polyoxyethylensorbitanmonooleat, -laurat, bzw. -stearat und Blockcopolymere aus Propylen- und/oder Ethylenoxid verwendet werden.

Als organische Lösemittel kommen beispielsweise lineare aliphatische Kohlenwasserstoffe wie n-Pentan, n-Hexan, n-Heptan, verzweigte aliphatische Kohlenwasserstoffe (Isoparaffine), cyclo-aliphatische Kohlenwasserstoffe wie Cyclohexan und Decalin, sowie aromatische Kohlenwasserstoffe wie Benzol, Toluol und Xylol zum Einsatz. Darüber hinaus eignen sich Alkohole, Ketone, Carbonsäureester, Nitroverbindungen, halogenhaltige Kohlenwasserstoffe, Ether und viele andere organische Solventien. Bevorzugt sind solche organischen Lösemittel, die mit Wasser azeotrope Gemische bilden, besonders bevorzugt sind solche, die dabei einen möglichst hohen Wasseranteil im Azeotrop aufweisen.

Die wasserquellbaren Copolymere fallen zunächst in gequollener Form als fein verteilte wässrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein pulverförmiger Feststoff. Die inverse Suspensionspolymerisation hat bekanntlich den Vorteil, dass durch Variation der Polymerisationsbedingungen die Partikelgrößenverteilung der Pulver kontrolliert werden kann und damit ein zusätzlicher Verfahrensschritt (Mahlvorgang) zur Einstellung der Partikelgrößenverteilung meist vermieden werden kann.

Eine bevorzugte Ausführungsform der Erfindung sind Zusammensetzungen, welche dadurch gekennzeichnet sind, dass in den anionischen vernetzten Polyelektrolyten α ) sulfonsäuregruppenhaltige Struktureinheiten der allgemeinen Formel (I), bevorzugt in einer Menge von 5 bis 99,99 mol %, besonders bevorzugt 20 bis 80 mol %, enthalten sind, 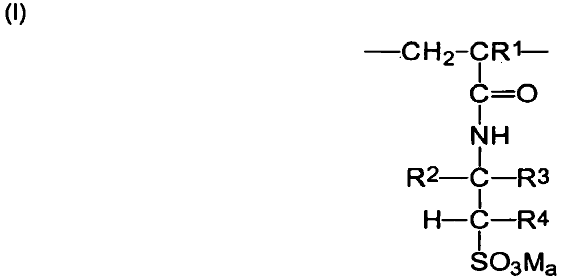 worin
R¹ gleich oder verschieden ist und durch Wasserstoff und/oder einen Methylrest repräsentiert wird,
R², R³, R⁴ jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,
M gleich oder verschieden ist und durch Wasserstoff, ein ein- oder zweiwertiges Metallkation und/oder ein Ammoniumion repräsentiert wird,
a gleich oder verschieden ist und durch 1/2 und/oder 1 repräsentiert wird. Im Fall zweiwertiger Metallkationen nimmt a den Wert 1/2 an.

Bevorzugt geht die der allgemeinen Formel (I) entsprechende sulfonsäuregruppenhaltige Struktureinheit aus der Copolymerisation von einer oder mehreren der Monomerspezies 2-Acrylamido-2-methylpropansulfonsäure, 2-Methacrylamido-2-methylpropansulfonsäure, 2-Acrylamidobutansulfonsäure, und / oder 2-Acrylamido-2,4,4-trimethylpentansulfonsäure, bzw. jeweils den Salzen der genannten Säuren hervor. Besonders bevorzugt sind 2-Acrylamido-2-methylpropansulfonsäure und deren Salzverbindungen. Die den Salzverbindungen der Säuren zugehörigen Kationen können dabei jeweils als ein- oder zweiwertige Metallkationen vorliegen, wie vorzugsweise Natrium-, Kalium-, Calcium- oder Magnesiumionen oder als Ammoniumionen, die sich ableiten von Ammoniak, primären, sekundären oder tertiären, C₁- bis C₂₀-Alkylaminen, C₁- bis C₂₀-Alkanolaminen, C₅- bis C₈-Cycloalkylaminen und C₆- bis C₁₄-Arylaminen. Die Alkylreste können jeweils verzweigt oder unverzweigt sein. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin. Bevorzugte Kationen sind Alkalimetallionen und/oder Ammoniumionen, besonders bevorzugt ist das Natriumion.

Als weitere anionische Monomerkomponenten können in den α ) anionischen vernetzten Polyelektrolyten, als auch in den γ ) ampholytischen vernetzten Polyelektrolyten, zusätzlich ethylenisch ungesättigte, wasserlösliche Carbonsäuren und/oder Carbonsäureanhydride bei der Polymerisation verwendet werden, bevorzugt in einer Menge von weniger als 40 mol %, besonders bevorzugt weniger als 25 mol %, bezogen auf die Gesamtmolzahl aller-Monomere in dem wasserquellbaren Polymer. Bei den ethylenisch ungesättigten Carbonsäuren kann es sich beispielsweise um Acrylsäure, Methacrylsäure, Ethacrylsäure, α-Chloracrylsäure, α-Cyanoacrylsäure, β-Methacrylsäure (Crotonsäure), α-Phenylacrylsäure, β-Acryioxypropionsäure, Sorbinsäure, α-Chlorsorbinsäure, 2'-Methylisocrotonsäure, Zimtsäure, p-Chlorzimtsäure, β-Stearylacrylsäure, Itaconsäure, Citraconsäure, Mesacronsäure, Glutaconsäure, Aconitsäure, Maleinsäure, Fumarsäure und/oder Tricarboxyethylen handeln. Als Carbonsäureanhydrid kann Maleinsäureanhydrid eingesetzt werden. Die vorstehend genannten weiteren anionischen Monomerkomponenten können auch in den γ ) ampholytischen vernetzten Polyelektrolyten als anionische Komponente enthalten sein, bevorzugt in einer Menge von weniger als 40 mol %, besonders bevorzugt weniger als 25 mol %, bezogen auf die Gesamtmolzahl aller Monomere in dem wasserquellbaren Polymer.

Eine bevorzugte Ausführungsform der Erfindung sind Zusammensetzungen, welche dadurch gekennzeichnet sind, dass in den kationischen vernetzten Polyelektrolyten β ) kationische, ein quaterniertes Stickstoffatom aufweisende Struktureinheiten der allgemeinen Formel (II), bevorzugt in einer Menge von 5 bis 99,99 mol %, besonders bevorzugt 20 bis 80 mol %, enthalten sind, 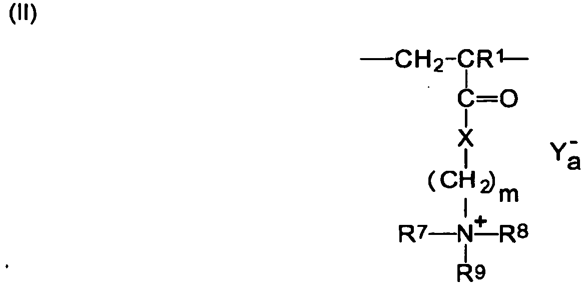 worin
R¹ gleich oder verschieden ist und durch Wasserstoff und/oder einen Methylrest repräsentiert wird,
R⁷, R⁸, R⁹, R¹⁰
jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
m gleich oder verschieden ist und durch eine ganze Zahl von 1 bis 6 repräsentiert wird,
X gleich oder verschieden ist und durch Sauerstoff und/oder N-R¹⁰ repräsentiert wird,
Y⁻ₐ gleich oder verschieden ist und durch ein Halogenid, C₁-bis C₄-Alkylsulfat, C₁-bis C₄-Alkylsulfonat und/oder Sulfat, repräsentiert wird,
a gleich oder verschieden ist und durch 1/2 und/oder 1 repräsentiert wird. Im Fall zweifach geladener Ionen wie Sulfat nimmt a den Wert 1/2 an.

In den kationischen wasserquellbaren Polyelektrolyten geht die der allgemeinen Formel (III) entsprechende, ein quaterniertes Stickstoffatom aufweisende Struktureinheit bevorzugt hervor aus der Polymerisation von einer oder mehreren Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloyl-amino)-propyl]-trimethylammoniumsalze und / oder [3-(Methacryloylamino)-propyl]-trimethylammoniumsalze.

Bevorzugt sind Zusammensetzungen, welche dadurch gekennzeichnet sind, dass in den γ ) ampholytischen vernetzten Polyelektrolyten sulfonsäuregruppenhaltige Struktureinheiten der allgemeinen Formel (I) und kationische, ein quaterniertes Stickstoffatom aufweisende Struktureinheiten der allgemeinen Formel (II) enthalten sind. Die Strukturformeln (I) und (II) wurden schon vorstehend beschrieben. Die anionischen Monomere gemäß der Formel (I) sind bevorzugt in einer Menge von 5 bis 95 mol %, die kationischen Monomere gemäß der Formel (II) bevorzugt in einer Menge von 5 bis 95 mol % in den γ ) ampholytischen vernetzten Polyelektrolyten enthalten. Die Summe der kationischen und der anionischen Polymere beträgt bevorzugt 5 mol % bis 99,99 mol %, besonders bevorzugt 20 mol % bis 80 mol %. Die vorstehend gemachten Angaben in mol % beziehen sich jeweils auf die Summe aller durch radikalische Polymerisation erhältlichen Struktureinheiten, in anderen Worten auf die Summe aller Monomere in den jeweiligen Polymeren.

Bevorzugt sind Zusammensetzungen, die dadurch gekennzeichnet sind, dass (meth)acrylamidogruppenhaltige Struktureinheiten der allgemeinen Formel (III), bevorzugt in einer Menge von 30 bis 94 mol %, besonders bevorzugt in einer Menge von 40 bis 80 mol%, jeweils bezogen auf die Gesamtzahl aller durch radikalische Polymerisation erhältlichen Struktureinheiten, in den α ) anionischen vernetzten Polyelektrolyten, in den β ) kationischen vernetzten Polyelektrolyten und/oder γ ) in den ampholytischen vernetzten Polyelektrolyten,
enthalten sind, 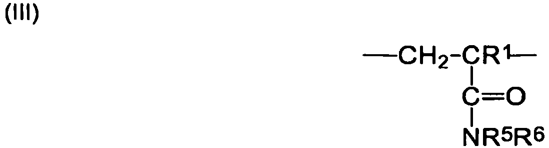 worin
R¹ die vorstehend genannte Bedeutung hat,
R⁵ und R⁶jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird.

Beispielsweise gehen die Struktureinheiten (III) aus der Copolymerisation von einer oder mehreren der Monomerspezies Acrylamid, Methacrylamid, N-Methyl(meth)acrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid hervor. Bevorzugt sind Methylacrylamid, N,N-Dimethylacrylamid, und Methacrylamid, besonders bevorzugt ist Acrylamid. In den anionischen, in den kationischen und in den ampholytischen vernetzten Polyelektrolyten sind die (meth)acrylamidogruppenhaltigen Struktureinheiten der Strukturformel (III) bevorzugt von 30 bis 94 mol %, bevorzugt von 40 bis 80 mol % und ganz besonders bevorzugt von 50 bis 70 mol % enthalten, jeweils bezogen auf die Gesamtzahl aller durch radikalische Polymerisation erhältlichen Struktureinheiten.

In einer weiteren bevorzugten Ausführungsform enthalten die δ ) nichtionischen vernetzten Polymere, welche ein Hydrogel ausbilden können, (meth)acrylamidogruppenhaltigen Struktureinheiten der allgemeinen Formel (III). Die Formel (III) wurde vorstehend erläutert. Bevorzugt gehen die Struktureinheiten (III) aus der Copolymerisation von einer oder mehreren der ebenfalls vorstehend genannten acrylamidogruppenhaltigen Monomerspezies hervor. Bevorzugt sind wiederum (Meth)acrylamid, und N,N-Dimethyl(meth)acrylamid, besonders bevorzugt ist Acrylamid. Die Struktureinheiten gemäß der Formel (III) sind bevorzugt in einer Menge von 50 bis 99,99 mol % enthalten, jeweils bezogen auf die Gesamtzahl aller durch radikalische Polymerisation erhältlichen Struktureinheiten.

In einer bevorzugten Ausführungsform betrifft die Erfindung Zusammensetzungen, wobei die Alternativen
a ) anionische vernetzte Polyelektrolyte,
β ) kationische vernetzte Polyelektrolyte,
γ ) ampholytische vernetzte Polyelektrolyte und/oder
δ ) nichtionische vernetzte Polymere
dadurch gekennzeichnet sind, dass das wasserquellbare Polymer, welches ein Hydrogel ausbilden kann, Struktureinheiten enthält, die sich von Monomeren ableiten, welche nur eine radikalisch polymerisierbare, ethylenisch ungesättigte Vinylgruppe aufweisen und vernetzende Struktureinheiten, die sich von Monomeren ableiten, welche mehrfach ethylenisch ungesättigte Vinylgruppen aufweisen, wobei bevorzugt der Anteil der Struktureinheiten, die sich von Monomeren ableiten, welche mehrfach ethylenisch ungesättigte Vinylgruppen aufweisen von 0.01 bis 10 mol %, besonders bevorzugt 0.1 bis 5 mol %, bezogen auf die Summe alle Monomere beträgt.

Die Vernetzung der Polymere zu einem dreidimensionalen Netwerk kann bevorzugt bei den Alternativen α ), β), γ ) und δ ) während der radikalischen Polymerisation erfolgen, durch Einpolymerisation vernetzender Struktureinheiten, die sich von Monomeren ableiten, welche mehrfach ethylenisch ungesättigte Vinylgruppen aufweisen. In den jeweiligen wasserquellbaren Polymeren α ), β ), γ ) oder δ ) beträgt bevorzugt der Anteil der Struktureinheiten, die sich von Monomeren ableiten, welche mehrfach ethylenisch ungesättigte Vinylgruppen aufweisen, von 0.01 bis 10 mol %, besonders bevorzugt 0.1 bis 5 mol %, bezogen auf die Summe aller Monomere in dem jeweiligen wasserquellbaren Polymer. Der Effekt der mehrfach ethylenisch ungesättigten Vinylgruppen beruht darauf, dass sie zur Ausbildung eines Netzwerks durch eine Vernetzung führen, bzw. eine Verbrückung von Polymerketten bewirken. Ohne vernetzende Monomere würde man bekanntlich geradkettige Polymere erhalten.
Beispielsweise können die Struktureinheiten, die sich von Monomeren ableiten, welche mehrfach ethylenisch ungesättigte Vinylgruppen aufweisen (Vernetzermonomere) mindestens zwei (Meth)acrylatgruppen, Vinylethergruppen, Allylgruppen und / oder (Meth)acrylamid-Gruppen aufweisen.

Man unterscheidet hydrolyselabile und hydrolysestabile Vernetzer. Unter einem hydrolysestabilen Vernetzer soll ein Vernetzer verstanden werden, der - im Netzwerk eingebaut - pH-Wert-unabhängig, insbesondere bevorzugt auch bei einem hohen pH-Wert von größer als 7, bevorzugt größer als 9, seine vernetzende Wirkung behält. Die Verknüpfungspunkte des Netzwerkes, welche bevorzugt durch radikalische Polymerisation von Vernetzermonomeren mit mehrfach ethylenisch ungesättigten Vinylgruppen eingeführt werden, können also nicht durch eine pH-Wert-Änderung des Quellmediums aufgebrochen werden. Unter dem Quellmedium soll die wasserhaltige, bauchemische Mischung verstanden werden, in welche die erfindungsgemäßen Zusammensetzungen zum Zweck der Beschleunigung des Abbindens und zur Steigerung der Frühfestigkeiten eingebracht werden. Meist ist diese aufgrund des Zementgehalts stark alkalisch. Beispiele für hydrolysestabile Vernetzer sind N,N'-Methylenbis(meth)acrylamid und mehr als eine Maleinimidgruppe pro Molekül aufweisende Monomere wie Hexamethylenbismaleinimid; mehr als eine Vinylethergruppe pro Molekül aufweisende Monomere wie Ethylenglykoldivinylether, Triethylenglykoldivinylether und/oder Cyclohexandioldivinylether, beispielsweise Cyclohexan-1,4-dioldivinylether. Auch können Allylamino- oder Allylammonium-Verbindungen mit mehr als einer Allylgruppe, wie Triallylamin und/oder Tetraallylammoniumsalze eingesetzt werden. Zu den hydrolysestabilen Vernetzern gehören auch die Allylether, wie Tetraallyloxyethan und Pentaerythrittriallylether.

In manchen Anwendungen, besonders wenn es sich um standfeste Systeme wie Fliesenkleber handelt, ist es vorteilhaft hydrolysestabile Vernetzer zu benutzen, da diese als Superabsorber beim Anmischen des Trockenmörtels, bzw. des Fliesenklebers mit Wasser wirken. Ein Teil des Wassers wird dem Baustoff entzogen und vorteilhafter Weise kann die Dosierung anderer Additive wie Dispersionspulver und Celluloseether reduziert werden. Dieser Effekt wurde in der DE 10 2007 027470 A1 beschrieben. Im Gegensatz dazu stehen hydrolyselabile Vernetzer, die - im Netzwerk eingebaut - ihre vernetzende Wirkung durch eine Änderung des pH-Wertes, insbesondere eine Erhöhung des pH-Wertes, verlieren können. Selbstverständlich können auch hydrolyselabile und hydrolysestabile Vernetzer kombiniert werden.

Bevorzugt sind Zusammensetzungen, die dadurch gekennzeichnet sind, dass in den wasserquellbaren Polymeren, welche durch radikalische Polymerisation erhalten werden, bezogen auf die Gesamtmolzahl aller Monomere, weniger als 40 mol %, besonders bevorzugt weniger als 25 mol %, carboxylische Monomere, bevorzugt monocarboxylische Monomere enthalten sind. Carboxylische Monomere können aufgrund ihres anionischen Charakters insbesondere in den α ) anionischen vernetzten Polyelektrolyten und/oder in den γ ) ampholytischen vernetzten Polyelektrolyten einpolymerisiert werden.

In den wasserquellbaren Polymeren, welche bevorzugt aus einer radikalischen Polymerisation erhalten werden, können weitere Monomere zur Polymerisation verwendet werden, beispielsweise Acrylnitril, Methacrylnitril, Vinylpyridin, Isoprenol, Hydroxybutylvinylether, Hydroxyethylvinylether oder Alkoxylate, bevorzugt Ethoxylate der vorstehend genannten ethylenisch ungesättigten Alkohole, Ester von (Meth)acrylsäure mit Alkylpolyalkylenglykolen (bevorzugt Methylpolyethylenglykolen (M-PEG)) Styrol, Vinylacetat und/oder hydroxygruppenhaltige (Meth)acrylsäureester wie Hydroxyethyl(meth)acrylat und/oder Hydroxypropyl(meth)acrylat. Bevorzugt könnenTristyrylphenol-polyethylenglykol-1100-methacrylat, Behenylpolyethylenglykol-1100-methacrylat, Stearylpolyethylenglykol-1100-methacrylat, Tristyrylphenol-polyethylenglykol-1100-acrylat, Tristyrylphenol-polyethenglykol-1100-monovinylether, Behenylpolyethenglykol-1100-monovinylether, Stearylpolyethenglykol-1100-monovinylether, Tristyrylphenol-polyethylenglykol-1100-vinyloxy-butylether, Behenylpolyethylenglykol-1100-vinyloxy-butylether, Tristyrylphenol-polyethylenglykol-block-propylenglykolallylether, Behenylpolyethylenglykol-block-propylenglykolallylether, Stearylpolyethylenglykol-block-propylenglykolallylether, Allylpolyethylenglykol-(350 bis 2000), Methylpolyethylenglykol-(350 bis 2000)-monovinylether, Polyethylenglykol-(500 bis 5000)-vinyloxy-butylether, Polyethylenglykol-block-propylenglykol-(500 bis 5000)-vinyloxy-butylether und Methylpolyethylenglykol-block-propylenglykolallylether enthalten sein.

Bevorzugt sind die Struktureinheiten, die sich aus einer Copolymerisation der im vorigen Absatz genannten nichtionischen Monomere ableiten, in einer Menge von 1 bis 30 mol %, besonders bevorzugt 2 bis 15 mol %, bezogen auf die Gesamtzahl aller Monomere in den wasserquellbaren Polymeren enthalten.

Bevorzugt ist, dass die hydrolyselabilen, vernetzenden Struktureinheiten sich von Monomeren ableiten, welche bei einem pH-Wert von 9 bis 14 in wässriger Umgebung hydrolysieren. Beim Anmischen zementhaltiger Bindemittelsysteme mit Wasser stellt sich typischerweise ein sehr hoher pH-Wert ein. Der hohe pH-Wert kann beispielsweise zur Hydrolyse von Esterbindungen führen. Hydrolyselabile Vernetzer können sein: Mehrfach (meth)acrylfunktionelle Monomere, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldiacrylat, Ethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethylolpropantrimethacrylat, Cyclopentadiendiacrylat, Tris(2-hydroxyethyl)isocyanurattriacrylat und/oder Tris(2-hydroxy)[ethyl]isocyanurattrimethacrylat; mehr als eine Vinylester-, bzw. Allylestergruppe mit entsprechender Carbonsäure aufweisende Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat. Als hydrolyselabile Vernetzer können auch Umsetzungsprodukte von ethylenisch ungesättigten Dicarbonsäuren und/oder Dicarbonsäureanhydriden mit Polyolen, bevorzugt Triolen eingesetzt werden. Bevorzugt erfolgt die Umsetzung in einem Molverhältnis von ungesättigter Dicarbonsäure zu Triol größer als 1:1, besonders bevorzugt in einem Verhältnis größer als 2:1, insbesondere größer gleich 3:1. Als Dicarbonsäure kommt insbesondere bevorzugt Maleinsäure oder Fumarsäure und/oder dessen Anhydrid zum Einsatz. Als Triolkomponente können beispielsweise eingesetzt werden Butan-1,2,4-triol, n-Pentan-1,2,5-triol, n-Pentan-1,3,5-triol, n-Hexan-1,2,6-triol, n-Hexan-1,2,5-triol und/oder n-Hexan-1,3,6-triol. Entsprechende Esterverbindungen mit mehreren zur radikalischen Polymerisation geeigneten ethylenisch ungesättigten Vinylgruppen sind in der internationalen Patentanmeldung PCT/EP2010/059847 als oligomere oder polymere Komponente C beschrieben. Diese Verbindungen sind als hydrolyselabile Vernetzer geeignet, die Offenbarung der PCT/EP2010/059847 bezüglich der Komponente C wird durch Verweis an dieser Stelle eingefügt.

Ester von Acrylaten mit Alkoholen sind ein Beispiel für bei hohem pH-Wert relativ hydrolyseempfindliche Ester. Insbesondere bevorzugt aufgrund ihrer relativ hohen Hydrolysegeschwindigkeit im basischen Medium, insbesondere bei einem pH-Wert größer 9, sind Ester von Acrylaten mit mehrfach hydroxyfunktionellen Alkoholen. Beispiele für besonders bevorzugte hydrolyselabile Vernetzer sind 1,4-Butandioldiacrylat, 1,3-Butylenglykoldiacrylat, Diethylenglykoldiacrylat, Ethylenglykoldiacrylat, ethoxyliertes Bisphenol-A-diacrylat, 1,6-Hexandioldiacrylat, Polyethylenglykoldiacrylat, Triethylenglykoldiacrylat, Tripropylenglykoldiacrylat, Tetraethylenglykoldiacrylat, Dipentaerythritpentaacrylat, Pentaerythrittetraacrylat, Pentaerythrittriacrylat, Trimethylolpropantriacrylat, Cyclopentadiendiacrylat und/oder Tris(2-hydroxyethyl)isocyanurattriacrylat.

Durch die Hydrolyse wird die Vernetzung und damit das dreidimensionale Polymernetzwerk aufgehoben und der Einfluss auf die Rheologie in wässrigen Baustoffmischungen, insbesondere in zementären Systemen, kann gering gehalten werden. Insbesondere ein Verdickungseffekt durch die wasserentziehende Wirkung der wasserquellbaren Polymere kann bei manchen Anwendungen unerwünscht sein. Auch kann aufgrund des hydrolysebedingten Abbaus des dreidimensionalen Netzwerks die schnelle und effiziente Freisetzung der als Beschleuniger wirksamen Calciumsilikathydrat-Partikel beim Einbringen in wässrige zementhaltige Baustoffmischungen gewährleistet werden. Insbesondere vorteilhaft ist es bei der Synthese des hydrolyselabilen wasserquellbaren Polymers (Superabsorber) eine relativ hohe Menge an Kettenabbruchreagenz (Kettenregler) zu verwenden, um in der Anwendung nach Hydrolyse des Vernetzers in wässrigen zementhaltigen Baustoffmischungen relativ niedermolekulare Polymere, bzw. Polymerbruchstücke, zu erhalten. Diese niedermolekularen Polymere haben einen eher geringen Einfluss auf die Rheologie, insbesondere einen geringen Verdickungseffekt. Geeignete Kettenregler sind Ameisensäure oder ihre Salze, z.B. Natriumformiat, Verbindungen, die eine Mercaptogruppe (R-SH) oder eine Mercaptatgruppe (R-S-M+) enthalten, wobei hier jeweils der Rest R ein organischer aliphatischer oder aromatischer Rest mit 1 bis 16 C-Atomen sein kann (z.B. Mercaptoethanol, 2-Mercaptoethylamin, 2-Mercaptoethylammoniumchlorid, Thioglykolsäure, Mercaptoethansulfonat (Natriumsalz), Cystein, Trismercaptotriazol (TMT) als Natriumsalz, 3-Mercaptotriazol, 2-Mercapto-1-methylimidazol), Verbindungen, die eine R-S-S-R' - Gruppe (Disulfitgruppe) enthalten, wobei hier die Reste R und R' unabhängig voneinander ein organischer aliphatischer oder aromatischer Rest mit 1 bis 16 C-Atomen sein können (z.B. Cystaminiumdichlorid, Cystein), phosphorhaltige Verbindungen, wie hypophosphorige Säure und deren Salze (z.B. Natriumhypophosphit) oder schwefelhaltige anorganische Salze wie Natriumsulfit. Außerdem können doppelbindungshaltige Sulfonsäuren, z.B. Natriummethallylsulfonat verwendet werden.

Besonders bevorzugt sind durch radikalische Polymerisation hergestellte vernetzte Polymere, die Struktureinheiten enthalten, die sich von Monomeren ableiten, welche bei einem pH-Wert von 9 bis 14 in wässriger Umgebung hydrolysieren, wobei durch die Hydrolyse die vernetzende Wirkung aufgehoben wird und bei deren Herstellung Bedingungen gewählt wurden (insbesondere die Art und Menge des Kettenabbruchreagens), so dass bei der Hydrolyse kurze Bruchstücke entstehen, die die Rheologie des Mörtelsystems möglichst wenig beeinflussen. Bevorzugt beträgt das Molekulargewicht M_{w} der Bruchstücke nach der Hydrolyse weniger als 1.000.000 g/mol, besonders bevorzugt weniger als 500.000 g/mol.

Die Erfindung betrifft auch ein Verfahren zur Herstellung von, bevorzugt pulverförmigen, Zusammensetzungen, wobei folgende Verfahrensschritte
a) In Kontakt bringen einer wässrigen, bevorzugt als Abbinde- und Aushärtungsbeschleuniger für zementhaltige Bindemittelsysteme geeigneten Suspension mit mindestens einem wasserquellbaren Polymer, welches ein Hydrogel ausbilden kann
b) Trocknen des Produkts aus dem Schritt a) bei Temperaturen unter 140 °C, bevorzugt bei Temperaturen kleiner als 100 °C, insbesondere bevorzugt bei Temperaturen kleiner als 80 °C und am meisten bevorzugt bei Temperaturen zwischen 15 °C und 80 °C durchgeführt werden. Vorzugsweise wird das Verfahren, insbesondere die Verfahrensschritte a) und b), in Abwesenheit von (Portland)zement ausgeführt.
Der Schritt a) des Verfahrens kann beispielsweise durch Vermischen einer geeigneten Suspension von feinteiligem Calciumsilikathydrat mit den wasserquellbaren Polymeren erfolgen. Im Allgemeinen erhält man in diesem Arbeitsschritt ein Hydrogel mit einer gelartigen Konsistenz. Dieses wird bevorzugt zum Trocknen zerkleinert.

Im Trocknungsschritt b) wird bevorzugt bei niedrigen Temperaturen gearbeitet, insbesondere bevorzugt bei niedrigen Temperaturen und vermindertem Druck. Die gewählte Trocknungstemperatur sollte bevorzugt kleiner als 100 °C sein, um eine Dehydratisierung der Calciumsilikathydratpartikel zu vermeiden. Zum Trocknen sind beispielsweise Umlufttrockenschrank, Vakuumtrockenschrank oder Wirbelbetttrockner geeignet. Als eine bevorzugte Trocknungsmethode ist das Wirbelbettverfahren zu nennen, da relativ hohe Trocknungsraten erreicht werden können.

Ein bevorzugtes Verfahren ist, dass die im Verfahrensschritt a) als Edukt verwendete wässrige Suspension von Calciumsilikathydrat durch Umsetzung einer wasserlöslichen Calciumverbindung mit einer wasserlöslichen Silikatverbindung erhalten wurde, wobei die Umsetzung der wasserlöslichen Calciumverbindung mit der wasserlöslichen Silikatverbindung in Anwesenheit einer wässrigen Lösung erfolgt, welche bevorzugt ein wasserlösliches, sich als Fließmittel für hydraulische Bindemittel eignendes Kammpolymer enthält. Es wird auf die Patentanmeldung WO 2010026155 A1 verwiesen, in welcher die entsprechenden Verfahren zur Herstellung der wässrigen Suspension von Calciumsilikathydrat und die dabei verwendeten wasserlöslichen, sich als Fließmittel für hydraulische Bindemittel eignenden Kammpolymere beschrieben sind. Der Inhalt der WO 2010026155 wird an dieser Stelle durch Verweis eingefügt.

Eine weitere bevorzugte Ausführungsform des Verfahrens ist dadurch gekennzeichnet, dass sich ein Verfahrensschritt c) anschließt, welcher das Vermahlen der getrockneten Produkte aus dem Verfahrensschritt b) zu Pulvern umfasst. Bevorzugt wird die Partikelgröße durch das Vermahlen so eingestellt, dass mehr als 98 Gew.-% der Partikel ein Sieb der Maschengröße 350 µm passieren, besonders bevorzugt mehr als 98 Gew.-% der Partikel ein Sieb der Maschengröße 200 µm passieren. Das Mahlen kann bevorzugt durch eine Zentrifugalmühle oder eine Gegenprallmühle erfolgen. Die Bestimmung der Partikelgröße erfolgt dabei nach der Norm edana 420.2-02. Vorteil des Vermahlens zu Pulvern ist eine leichtere Handhabbarkeit, insbesondere wird eine homogene Verteilung der erfindungsgemäßen Zusammensetzungen in Trockenmörteln wesentlich erleichtert, bzw. erst möglich.

Die Erfindung betrifft auch die Verwendung von festen Zusammensetzungen enthaltend Calciumsilikathydrat und mindestens ein wasserquellbares Polymer, welches ein Hydrogel ausbilden kann, als Erhärtungsbeschleuniger in Zement, Hüttensand, Flugasche, Silikastaub, Metakaolin, natürliche Puzzolane, gebrannte Ölschiefer und/oder Calcium-Aluminat-Zement enthaltenden Baustoffmischungen oder in Baustoffmischungen enthaltend Zement und Bindemittel, welche auf Calciumsulfat basieren, bevorzugt in Baustoffmischungen, welche als hydraulisches Bindemittel im wesentlichen Zement enthalten. Bevorzugt ist dabei die Dosierung bezogen auf das jeweilige Bindemittel, insbesondere bevorzugt bezogen auf (Portland)zement, von 0.1 bis 5 Gew.-%, besonders bevorzugt von 0.1 bis 2 Gew.-%. Dabei stammt das in den erfindungsgemäßen festen Zusammensetzungen enthaltene Calciumsilikathydrat bevorzugt nicht aus einer Hydratationsreaktion von (Portland)zement mit Wasser. Besonders bevorzugt enthalten die erfindungsgemäßen festen Zusammensetzungen keinen (Portland)zement, der mit Wasser in Berührung gekommen ist. Unter (Portland)zement, der mit Wasser in Berührung gekommen ist, sollen dabei auch inzwischen getrocknete Mischungen von (Portland)zement und Wasser verstanden werden, welche noch einen bevorzugt geringen Wasseranteil enthalten können.

Bevorzugt werden die erfindungsgemäßen festen Zusammensetzungen in Trockenmörtelmischungen eingesetzt, insbesondere in Pulverform.

Die Erfindung betrifft auch die Verwendung der erfindungsgemäßen Zusammensetzungen als Mahlhilfsmittel bei der Herstellung von Zement, bevorzugt bei der Vermahlung des Klinkers oder Klinkerblends zum Zement. Unter Klinkerblend wird bevorzugt eine Mischung aus Klinker und Ersatzstoffen wie Schlacke, Flugasche und/oder Puzzolane verstanden. Dabei werden die Zusammensetzungen in Mengen von 0,001 % Gew. % bis 5 Gew. %, bevorzugt in Mengen von 0,01 Gew. % bis 0,5 Gew. %, jeweils bezogen auf den zu mahlenden Klinker oder Klinkerblend eingesetzt. Es ist möglich die erfindungsgemäßen Zusammensetzungen als Mahlhilfsmittel in Kugelmühlen oder auch in Vertikalmühlen einzusetzen. Die erfindungsgemäßen Zusammensetzungen können als Mahlhilfsmittel alleine oder auch in Kombination mit anderen Mahlhilfsmitteln verwendet werden, wie beispielsweise Mono-, Di-, Tri- und Polyglykole, Polyalkohole (zum Beispiel Glycerin verschiedener Reinheitsgrade, beispielsweise aus der Biodieselherstellung), Aminoalkohole (z.B. MEA, DEA, TEA, TIPA, THEED, DIHEIPA), organische Säuren und/oder deren Salze (z.B. Essigsäure und/oder deren Salze, Formiate, Gluconate), Aminosäuren, Zucker und Rückstände aus der Zuckerproduktion (z.B. Molasse, Vinasse), anorganische Salze (Chloride, Fluoride, Nitrate, Sulfate) und/oder organische Polymere (z.B. Polyethercarboxylate (PCEs)). Es hat sich herausgestellt, dass sich insbesondere die Frühfestigkeiten des so hergestellten Zements verbessern lassen. Ebenso sind die in der WO 2010026155 A1 offenbarten Beschleunigersuspensionen (flüssig) als auch die in der WO 2010026155 A1 offenbarten pulverförmigen Beschleuniger als Mahlhilfsmittel bei der Herstellung von Zement aus Klinker oder Klinkerblends geeignet. Diese Mahlhilfsmittel können ebenfalls alleine oder in Kombination mit der vorstehend genannten Liste von Mahlhilfsmitteln zum Einsatz kommen. Dabei kann wiederum sowohl eine Kugelmühle als auch eine Vertikalmühle zum Einsatz kommen.

Die Erfindung betrifft auch die Verwendung der erfindungsgemäßen festen Zusammensetzung enthaltend Calciumsilikathydrat und mindestens ein wasserquellbares Polymer, welches ein Hydrogel ausbilden kann, in einem Verfahren zur Herstellung einer hydraulisches Bindemittel enthaltenden spritzbaren Zusammensetzung, welche als wesentliche Komponenten Wasser, Aggregate, hydraulisches Bindemittel und Beschleuniger enthält und gekennzeichnet dadurch ist, dass die Calciumsilikathydrat enthaltende erfindungsgemäße Zusammensetzung vor und/oder an der Spritzdüse zugegeben wird. In bevorzugten Ausführungsformen können die erfindungsgemäßen festen Zusammensetzungen nach einem der abhängigen Ansprüche dieser Patentanmeldung zum Einsatz kommen. Weitere bevorzugte Ausführungsformen des Verfahrens zur Herstellung einer hydraulisch abbindenden, spritzbaren hydraulischen Bindemittelkomposition sind in der internationalen Anmeldung PCT/EP2010/062671 beschrieben. Die entsprechenden auf Calciumsilikathydrat basierenden Beschleuniger dieser Patentanmeldung können in analoger Weise in den Verfahren der PCT/EP2010/062671 verwandt werden. Der Inhalt der PCT/EP2010/062671 gilt an dieser Stelle durch Verweis eingefügt.

Die Erfindung betrifft Baustoffmischungen enthaltend feste Zusammensetzungen von Calciumsilikathydrat und mindestens einem wasserquellbaren Polymer, welches ein Hydrogel ausbilden kann und (Portland)zement, Hüttensand, Flugasche, Silikastaub, Metakaolin, natürliche Puzzolane, gebrannte Ölschiefer und/oder Calcium-Aluminat-Zement, oder Baustoffmischungen enthaltend Zement und Bindemittel, welche auf Calciumsulfat basieren, bevorzugt Baustoffmischungen, welche als hydraulisches Bindemittel im wesentlichen Zement enthalten. Bevorzugte Baustoffmischungen sind Fliesenkleberformulierungen, Putze, Klebe- und Armiermörtel, Vergussmörtel, Estriche und selbstverlaufende Spachtelmassen.

Bevorzugt sind Baustoffmischungen enthaltend feste Zusammensetzungen von Calciumsilikathydrat und mindestens einem wasserquellbaren Polymer, welches ein Hydrogel ausbilden kann und (Portland)zement, Hüttensand, Flugasche, Silikastaub, Metakaolin, natürliche Puzzolane, gebrannte Ölschiefer und/oder Calcium-Aluminat-Zement, wobei das Calciumsilikathydrat nicht aus einer Hydratationsreaktion von (Portland)zement mit Wasser stammt.

Bevorzugt sind Baustoffmischungen enthaltend feste Zusammensetzungen von Calciumsilikathydrat und mindestens einem wasserquellbaren Polymer, welches ein Hydrogel ausbilden kann und (Portland)zement, Hüttensand, Flugasche, Silikastaub, Metakaolin, natürliche Puzzolane, gebrannte Ölschiefer und/oder Calcium-Aluminat-Zement, wobei die feste Zusammensetzung keinen (Portland)zement enthält, der mit Wasser in Berührung gekommen ist. Unter (Portland)zement, der mit Wasser in Berührung gekommen ist, sollen dabei auch inzwischen getrocknete Mischungen von (Portland)zement und Wasser verstanden werden, welche einen bevorzugt geringen Wasseranteil enthalten können.

Unter Bindemitteln, welche auf Calciumsulfat basieren sollen beispielsweise Gips, Hemihydrat und Anhydrit verstanden werden.

Die Baustoffmischungen können als sonstige Zusatzmittel Entschäumer, Luftporenbildner, Füllstoffe, redispergierbare Polymerpulver, Verzögerer, Verdicker, Wasserretentionsmittel und/oder Netzmittel enthalten.

### Beispiele

### Herstellung der wasserquellbaren Polymere

Anionisches hydrolysestabiles superabsorbierendes Copolymer (Polymer 1):
In einem 2 I-Dreihalskolben mit Rührer und Thermometer wurden 160 g Wasser vorgelegt und anschließend nacheinander 352,5 g (0,74 mol, 28 mol %) 2-Acrylamido-2-methylpropansulfonsäure Natriumsalz (50 Gew.-%ige Lösung in Wasser), 286,4 g (2,0 mol, 72 mol %) Acrylamid (50 Gew.-%ige Lösung in Wasser) und 0,3 g (0,0021 mol, 0,08 Mol %) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b t - h) 15 cm · 10 cm · 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat Lösung, 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.
Das erhaltene Gelgranulat des Copolymers wurde gleichmäßig auf Trockengitter verteilt und in einem Umlufttrockenschrank bei ca. 120 bis 140 °C bis zur Gewichtskonstanz getrocknet. Es wurden ca. 375 g eines weißen, harten Granulats erhalten, welches mit Hilfe einer Zentrifugalmühle in einen pulverförmigen Zustand überführt wurde.

Anionisches Acrylsäurehaltiges hydrolysestabiles superabsorbierendes Copolymer (Polymer 2):
In einem 2 I-Dreihalskolben mit Rührer und Thermometer wurden 200 g Wasser vorgelegt, 27,1 g (0,38 mol, 13 mol %) Acrylsäure (99,5 Gew.-%ige Lösung in Wasser) zugegeben und mit 29,4 g Natronlauge (50 Gew.-%ige Lösung in Wasser) neutralisiert. Anschließend wurden nacheinander 218,8 g (0,46 mol, 17 mol %) 2-Acrylamido-2-methylpropansulfonsäure Natriumsalz (50 Gew.-%ige Lösung in Wasser), 286,4 g (2,0 mol, 70 mol %) Acrylamid (50 Gew.-%ige Lösung in Wasser) und 1,1 g (0,0030 mol, 0,1 mol %) Pentaerythritolallylether (70 Gew.-%ige Lösung in Wasser) zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b t · h) 15 cm · 10 cm · 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat Lösung, 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.

Das erhaltene Gelgranulat des Copolymers wurde gleichmäßig auf Trockengitter verteilt und in einem Umlufttrockenschrank bei ca. 120 bis 140 °C bis zur Gewichtskonstanz getrocknet. Es wurden ca. 280 g eines weißen, harten Granulats erhalten, welches mit Hilfe einer Zentrifugalmühle in einen pulverförmigen Zustand überführt wurde.

Gemischtionisches hydrolysestabiles superabsorbierendes Copolymer (Polymer 3):
In einem 2 I-Dreihalskolben mit Rührer und Thermometer wurden 33 g Wasser vorgelegt und anschließend nacheinander 411,0 g (0,86 mol, 49,9 mol %) 2-Acrylamido-2-methylpropansulfonsäure Natriumsalz (50 Gew.-%ige Lösung in Wasser), 309,6 g (0,90 mol, 49,9 mol %) 3-(Acryloylamino)-propyl]-trimethylammoniumchlorid (60 Gew.-%ige Lösung in Wasser) und 1,0 g (0,0027 mol, 0,2 mol %) Pentaerythritolallylether (70 Gew.-%ige Lösung in Wasser) zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b ·t · h) 15 cm · 10 cm · 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat Lösung 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.
Das erhaltene Gelgranulat des Copolymers wurde gleichmäßig auf Trockengitter verteilt und in einem Umlufttrockenschrank bei ca. 120 bis 140 °C bis zur Gewichtskonstanz getrocknet. Es wurden ca. 390 g eines weißen, harten Granulats erhalten, welches mit Hilfe einer Zentrifugalmühle in einen pulverförmigen Zustand überführt wurde.

Anionisches hydrolyselabiles superabsorbierendes Copolymer (Polymer 4)

In einem 2 I-Dreihalskolben mit Rührer und Thermometer wurden 145 g Wasser vorgelegt und anschließend nacheinander 319,3 g (0,70 mol, 25,8 mol %) 2-Acrylamido-2-methylpropansulfonsäure Natriumsalz (50 Gew.-%ige Lösung in Wasser), 283,5 g (2,00 mol, 73,8 mol %) Acrylamid (50 Gew.-%ige Lösung in Wasser) und 3,8 g (0,01 mol, 0,4 mol %) Diethylenglycoldiacrylat zugesetzt. Nach Zugabe von 6 g Natriummethallylsulfonat Lösung (10 Gew.-%ige Lösung in Wasser) wurde der pH-Wert mit 20 %iger Natronlauge auf 7 eingestellt und nach dreißigminütigem Spülen mit Stickstoff auf ca. 10 °C abgekühlt. Die Lösung wurde in einen Plastikbehälter mit den Maßen (bs t · h) 15 cm · 10 cm · 20 cm umgefüllt und anschließend wurden nacheinander 24 g einprozentige 2,2'-Azo-bis-(2-amidinopropan)-dihydrochlorid Lösung, 0,7 g einprozentige Rongalit C-Lösung, 16 g 0,1 prozentige tert.-Butylhydroperoxid-Lösung und 2,4 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.
Das erhaltene Gelgranulat des Copolymers wurde gleichmäßig auf Trockengitter verteilt und in einem Umlufttrockenschrank bei ca. 100 °C bis zur Gewichtskonstanz getrocknet. Es wurden ca. 305 g eines weißen, harten Granulats erhalten, welches mit Hilfe einer Zentrifugalmühle in einen pulverförmigen Zustand überführt wurde.

Nichtionisches hydrolyselabiles superabsorbierendes Copolymer (Polymer 5)

In einem 2 I-Dreihalskolben mit Rührer und Thermometer wurden 270 g Wasser vorgelegt und anschließend nacheinander 476,2 g (3,36 mol, 99,7 mol %) Acrylamid (50 Gew.-%ige Lösung in Wasser) und 3,2 g (0,008 mol, 0,3 mol %) Diethylenglycoldiacrylat zugesetzt. Nach Zugabe von 7,5 g Ameisensäure-Lösung (10 Gew.-%ige Lösung in Wasser) wurde der pH-Wert mit 20 %iger Natronlauge auf 7 eingestellt und nach dreißigminütigem Spülen mit Stickstoff auf ca. 10 °C abgekühlt. Die Lösung wurde in einen Plastikbehälter mit den Maßen (b · t · h) 15 cm · 10 cm · 20 cm umgefüllt und anschließend wurden nacheinander 24 g einprozentige 2,2'-Azo-bis-(2-amidinopropan)-dihydrochlorid Lösung, 0,7 g einprozentige Rongalit C-Lösung, 16 g 0,1 prozentige tert.-Butylhydroperoxid-Lösung und 2,4 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.

Das erhaltene Gelgranulat des Copolymers wurde gleichmäßig auf Trockengitter verteilt und in einem Umlufttrockenschrank bei ca. 100 °C bis zur Gewichtskonstanz getrocknet. Es wurden ca. 240 g eines weißen, harten Granulats erhalten, welches mit Hilfe einer Zentrifugalmühle in einen pulverförmigen Zustand überführt wurde.

Gemischtionisches hydrolyselabiles superabsorbierendes Copolymer (Polymer 6)

In einem 2 I-Dreihalskolben mit Rührer und Thermometer wurden 130 g Wasser vorgelegt und anschließend nacheinander 73,5 g (0,16 mol, 5,2 mol %) 2-Acrylamido-2-methylpropansulfonsäure Natriumsalz (50 Gew.-%ige Lösung in Wasser), 194,0 g (0,56 mol, 18,1 mol %) 3-(Acryloylamino)-propyl]-trimethylammoniumchlorid (60 Gew.-%ige Lösung in Wasser), 333,2 g (2,35 mol, 75,5 mol %) Acrylamid (50 Gew.-%ige Lösung in Wasser) und 16,6 g (0,038 mol, 1,2 mol %) Polyethylenglycol-300-diacrylat zugesetzt. Nach Zugabe von 6 g Ameisensäure-Lösung (10 Gew.-%ige Lösung in Wasser) wurde der pH-Wert mit 20 %iger Natronlauge auf 7 eingestellt und nach dreiβigminütigem Spülen mit Stickstoff auf ca. 10 °C abgekühlt. Die Lösung wurde in einen Plastikbehälter mit den Maßen (b · t· h) 15 cm · 10 cm · 20 cm umgefüllt und anschließend wurden nacheinander 24 g einprozentige 2,2'-Azo-bis-(2-amidinopropan)-dihydrochlorid Lösung, 0,7 g einprozentige Rongalit C-Lösung, 16 g 0,1 prozentige tert.-Butylhydroperoxid-Lösung und 2,4 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.

Das erhaltene Gelgranulat des Copolymers wurde gleichmäßig auf Trockengitter verteilt und in einem Umlufttrockenschrank bei ca. 100 °C bis zur Gewichtskonstanz getrocknet. Es wurden ca. 335 g eines weißen, harten Granulats erhalten, welches mit Hilfe einer Zentrifugalmühle in einen pulverförmigen Zustand überführt wurde.

### Herstellung der erfindungsgemäßen Zusammensetzungen

Die Herstellung der calciumsilikathydrathaltigen Hydrogele erfolgte durch Einstreuen eines, oder auch mehrerer, wasserquellbarer Polymere in das Produkt X-Seed ®-100 (erhältlich von der Firma BASF Construction Chemicals Europe AG).
In einem Becherglas wurden 100 mL X-Seed ®-100 vorgelegt und mit einem Fingerrührer gerührt. Vorsichtig wurde die entsprechende Menge (siehe Tabelle 1) der jeweiligen Superabsorberpartikel (Polymere 1 - 6) eingestreut und das entstehende Gel ca. 30 min weitergerührt. Das erhaltene Gel wurde zerkleinert und bei 45°C im Wirbelbett getrocknet. Das getrocknete Gel wurde anschließend grob zerkleinert und mit Hilfe einer Zentrifugalmühle in einen pulverförmigen Zustand überführt. Der mittlere Teilchendurchmesser des Polymerpulvers betrug 40 bis 60 µm. Die Bestimmung der Partikelgröße erfolgt dabei nach der Norm edana 420.2-02. Tabelle 1: erfindungsgemäße Zusammensetzungen:

| | **Einwaage superabsorbierendes Copolymer** | **Menge X-Seed®-100 Dispersion** |
|---|---|---|
| Pulver 1 | 10 g Polymer 1 (anionisches hydrolysestabiles superabsorbierendes Copolymer) | 100 mL |
| Pulver 2 | 10 g Polymer 2 (acrylsäurehaltiges hydrolysestabiles superabsorbierendes Copolymer) | 100 mL |
| Pulver 3 | 5 g Polymer 3 (gemischtionisches hydrolysestabiles superabsorbierendes Copolymer) | 100 mL |
| Pulver 4 | 5 g Polymer 4 (anionisches hydrolyselabiles superabsorbierendes Copolymer) | 100 mL |
| Pulver 5 | 5 g Polymer 5 (nichtionisches hydrolyselabiles superabsorbierendes Copolymer) | 100 mL |
| Pulver 6 | 5 g Polymer 6 (gemischtionisches hydrolyselabiles superabsorbierendes Copolymer) | 100 mL |

### Anwendungstechnische Untersuchungen

Um die Wirksamkeit der erhaltenen erfindungsgemäßen Pulver zu überprüfen, wurden 6-Stunden-Festigkeiten in einem Normenmörtel bestimmt (Prismen analog DIN EN 196-1, aber mit einem Wasserzementwert von 0,55). Rezeptur Normenmörtel:
250 g Wasser
1350 g Normsand
450 g CEM I 52,5 R Milke

Als Referenzversuche wurden folgende Mischungen getestet:
Referenz 1: Blindwert ohne Zusatz von Beschleuniger
Referenz 2: mit wässriger X-Seed®-100 Dispersion
Referenz 3: mit Pulver einer X-Seed®-100 Dispersion, das ohne Zusatz von superabsorbierenden Copolymeren getrocknet wurde (bei 60°C im Umlufttrockenschrank)
Referenz 4: mit Pulver einer X-Seed®-100 Dispersion, das mit Zusatz von 5 Gew.-% Starvis® T 50 F (anionischer Polyacrylamid-Verdicker) getrocknet wurde (bei 60°C im Umlufttrockenschrank)

Es wurden in allen Fällen Biegezug- und Druckfestigkeiten nach 6 Stunden und 28 Tagen bestimmt (Tabelle 2).

**Tabelle 2: Biegezug- und Druckfestigkeiten**

| | **Dosierung [g]** | **Biegezugfestigkeit [N/mm²] nach 6 h** | **Druckfestigkeit [N/mm²] nach 6 h** | **Biegezugfestigkeit [N/mm²] nach 28d** | **Druckfestigkeit [N/mm²] nach 28 d** |
|---|---|---|---|---|---|
| Referenz 1 (Blindwert) | - | nicht messbar, Prisma zerbricht beim Ausschalen | nicht messbar, Prisma zerbricht beim Ausschalen | 7,1 | 46,7 |
| Referenz 2 (wässrige X-Seed®-100 Dispersion ¹) | 32,1 | 2,1 | 6,8 | 8,2 | 55,5 |
| Referenz 3 (bei 60°C getrocknete X-Seed®- 100 Dispersion) | 7,9 | 0,9 | 2,7 | 9,5 | 47,1 |
| Referenz 4 (mit Starvis® T 50 F² bei 60°C getrocknete X-Seed@-100 Dispersion) | 8,4 | nicht messbar, Prisma zerbricht beim Ausschalen | nicht messbar, Prisma zerbricht beim Ausschalen | 6,2 | 36,9 |
| | | | | | |
| Pulver 1 (enthält anionisches hydrolysestabiles superabsorbierendes Copolymer) | 10,0 | 1,1 | 4,0 | 7,7 | 54,1 |
| Pulver 2 (enthält acrylsäurehaltiges hydrolysestabiles superabsorbierendes Copolymer) | 10,0 | 1,5 | 4,3 | 8,8 | 54,5 |
| Pulver 3 (enthält gemischtionisches hydrolysestabiles superabsorbierendes Copolymer) | 8,4 | 1,0 | 3,9 | 7,0 | 44,5 |
| Pulver 4 (enthält anionisches hydrolyselabiles superabsorbierendes Copolymer) | 8,4 | 1,5 | 5,1 | 9,0 | 49,6 |
| Pulver 5 (enthält nichtionisches hydrolyselabiles superabsorbierendes Copolymer) | 8,4 | 1,9 | 5,6 | 8,9 | 55,0 |
| Pulver 6 (enthält gemischtionisches hydrolyselabiles superabsorbierendes Copolymer) | 8,4 | 1,7 | 5,0 | 7,7 | 47,5 |

| | | | | | |
|---|---|---|---|---|---|
| ¹ Das Anmachwasser dieser Mörtelmischung wurde um 25,7 g reduziert, um den gleichen Wasserzementwert einzustellen. ² Starvis® T 50 F, Produkt der BASF Construction Polymers GmbH, ist ein anionischer 5 Polyacrylamid-Verdicker. | | | | | |

Beim Einsatz der erfindungsgemäßen Pulver konnte gezeigt werden, dass die Aktivität der erfindungsgemäßen Pulver als Beschleuniger beim Trocknen im Vergleich zu den Referenzversuchen 1, 3 und 4 verbessert wird. Im Vergleich zu der wässrigen Dispersion der Referenz 2 müssen nur relativ leichte Abschläge bei der jeweiligen Druckfestigkeitsentwicklung nach 6 Stunden hingenommen werden. Die beobachtete Wirkung als Beschleuniger war beim Einsatz der hydrolysierbaren wasserquellbaren Polymere (Copolymere 4, 5 und 6) höher als beim Einsatz der hydrolysestabilen Superabsorber (Copolymere 1, 2 und 3), was darauf schließen lässt, dass die Freisetzung der C-S-H-Partikel durch die Verwendung der hydrolysierbaren Vernetzer begünstigt wird. Es ist davon auszugehen, dass durch die Hydrolyse in den wässrigen zementhaltigen Systemen bei den dabei vorherrschenden hohen pH-Werten eine schnellere " Entknäuelung" des dreidimensionalen Netzwerks des Superabsorbers erfolgen kann und damit die Freisetzung des als Beschleuniger wirksamen Calciumsilikathydrats beschleunigt wird. Die Versuche zeigen, dass auch nach der Trocknung der wässrigen Beschleunigerdispersion nach dem erfindungsgemäßen Verfahren unter Einsatz von wasserquellbaren Polymeren, die ein Hydrogel ausbilden können, eine hohe Aktivität als Beschleuniger erhalten bleibt. Die Wirkung als Beschleuniger ist bei den Vergleichsversuchen mit nicht auf Hydrogelen basierenden Chemien (Referenz 4) ähnlich schlecht wie der nach 6 Stunden noch nicht messbare Blindwert (Referenz 1). Die Endfestigkeiten (Werte nach 28 Tagen) werden überraschenderweise durch die pulverförmigen Beschleuniger im Vergleich zum Blindwert ohne Zugabe irgendwelcher Additive (Referenz 1) in keinem Fall negativ, teilweise sogar positiv (Copolymere 1, 2 und 5) beeinflusst.

## Patentansprüche

1. Feste Zusammensetzung enthaltend Calciumsilikathydrat und mindestens ein wasserquellbares Polymer, welches ein Hydrogel ausbilden kann.

2. Zusammensetzung nach Anspruch 1, wobei das Gewichtsverhältnis des wasserquellbaren Polymers, welches ein Hydrogel ausbilden kann, zum Calciumsilikathydrat von 1:10 bis 3:1 beträgt.

3. Zusammensetzung nach Anspruch 1 oder 2, wobei das wasserquellbare Polymer, welches ein Hydrogel ausbilden kann, ausgewählt ist aus der Gruppe
a ) anionischer vernetzter Polyelektrolyte,
β ) kationischer vernetzter Polyelektrolyte,
γ ) ampholytischer vernetzter Polyelektrolyte und/oder
δ ) nichtionischer vernetzter Polymere, bevorzugt nichtionischer vernetzter Polymere aus radikalischer Polymerisation.

4. Zusammensetzung nach Anspruch 3, **dadurch gekennzeichnet, dass** in den anionischen vernetzten Polyelektrolyten a ), sulfonsäuregruppenhaltige Struktureinheiten der allgemeinen Formel (I), bevorzugt in einer Menge von 5 bis 99,99 mol %, besonders bevorzugt 20 bis 80 mol %, enthalten sind, 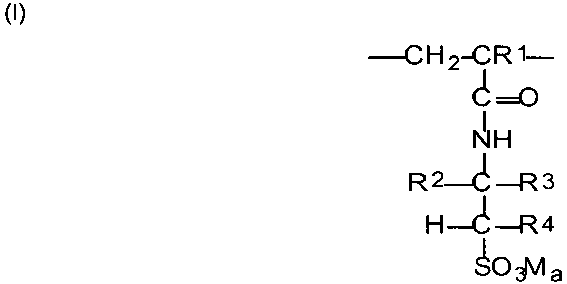 worin
R¹ gleich oder verschieden ist und durch Wasserstoff und/oder einen Methylrest repräsentiert wird,
R², R³, R⁴ jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,
M gleich oder verschieden ist und durch Wasserstoff, ein ein- oder zweiwertiges Metallkation und/oder ein Ammoniumion repräsentiert wird,
a gleich oder verschieden ist und durch 1/2 und/oder 1 repräsentiert wird.

5. Zusammensetzung nach Anspruch 3, **dadurch gekennzeichnet, dass** in den kationischen vernetzten Polyelektrolyten β ), kationische, ein quaterniertes Stickstoffatom aufweisende Struktureinheiten der allgemeinen Formel (II), bevorzugt in einer Menge von 5 bis 99,99 mol %, besonders bevorzugt 20 bis 80 mol %, enthalten sind, 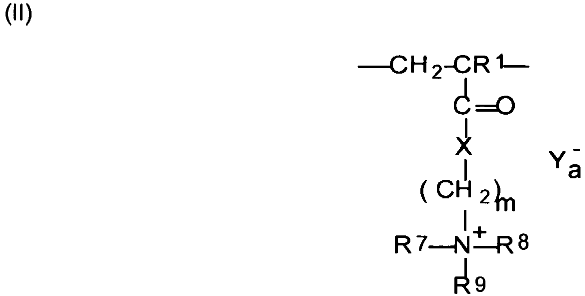 worin
R¹ gleich oder verschieden ist und durch Wasserstoff und/oder einen Methylrest repräsentiert wird,
R⁷, R⁸, R⁹, R¹⁰
jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
m gleich oder verschieden ist und durch eine ganze Zahl von 1 bis 6 repräsentiert wird,
X gleich oder verschieden ist und durch Sauerstoff und/oder N-R¹⁰ repräsentiert wird,
Y-ₐ gleich oder verschieden ist und durch ein Halogenid, d₁-bis C₄-Alkylsulfat, C₁-bis C₄-Alkylsulfonat und/oder Sulfat, repräsentiert wird,
a gleich oder verschieden ist und durch 1/2 und/oder 1 repräsentiert wird.

6. Zusammensetzung nach Anspruch 3, **dadurch gekennzeichnet, dass** in den γ ) ampholytischen vernetzten Polyelektrolyten sulfonsäuregruppenhaltige Struktureinheiten der allgemeinen Formel (I) und kationische, ein quaterniertes Stickstoffatom aufweisende Struktureinheiten der allgemeinen Formel (II) enthalten sind.

7. Zusammensetzung nach einem der Ansprüche 4 bis 6, **dadurch gekennzeichnet, dass** (meth)acrylamidogruppenhaltige Struktureinheiten der allgemeinen Formel (III), bevorzugt in einer Menge von 30 bis 94 mol %, in den α ) anionischen vemetzten Polyelektrolyten, in den β ) kationischen vernetzten Polyelektrolyten und/oder γ ) in den ampholytischen vernetzten Polyelektrolyten,
enthalten sind, 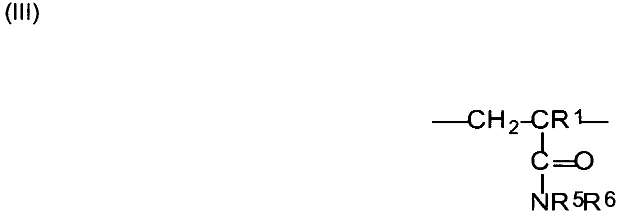 worin
R¹ die vorstehend genannte Bedeutung hat,
R⁵ und R⁶ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird.

8. Zusammensetzung nach Anspruch 3, **dadurch gekennzeichnet, dass** die δ ) nichtionischen vernetzten Polymere, welche ein Hydrogel ausbilden können, (meth)acrylamidogruppenhaltige Struktureinheiten der allgemeinen Formel (III) enthalten.

9. Zusammensetzung nach einem der Ansprüche 1 bis 8 **dadurch gekennzeichnet, dass** das wasserquellbare Polymer, welches ein Hydrogel ausbilden kann, Struktureinheiten enthält, die sich von Monomeren ableiten, welche nur eine radikalisch polymerisierbare, ethylenisch ungesättigte Vinylgruppe aufweisen und vernetzende Struktureinheiten, die sich von Monomeren ableiten, welche mehrfach ethylenisch ungesättigte Vinylgruppen aufweisen.

10. Zusammensetzung nach Anspruch 9, **dadurch gekennzeichnet, dass** in den wasserquellbaren Polymeren, bezogen auf die Gesamtmolzahl aller Monomere, weniger als 40 mol % carboxylische Monomere, bevorzugt monocarboxylische Monomere enthalten sind.

11. Zusammensetzung nach Anspruch 9 oder 10, **dadurch gekennzeichnet, dass** die vernetzenden Struktureinheiten sich von Monomeren ableiten, welche bei einem pH-Wert von 9 bis 14 in wässriger Umgebung hydrolysieren.

12. Verfahren zur Herstellung von, bevorzugt pulverförmigen, Zusammensetzungen gemäß einem der Ansprüche 1 bis 11, wobei folgende Verfahrensschritte
a) In Kontakt bringen-einer wässrigen, bevorzugt als Abbinde- und Aushärtungsbeschleuniger für zementhaltige Bindemittelsysteme geeigneten, Suspension von Calciumsilikathydrat mit mindestens einem wasserquellbaren Polymer, welches ein Hydrogel ausbilden kann und
b) Trocknen des Produkts aus dem Schritt a) bei Temperaturen unter 140 °C, bevorzugt bei Temperaturen kleiner als 100 °C, insbesondere bevorzugt bei Temperaturen kleiner als 80 °C und am meisten bevorzugt bei Temperaturen zwischen 15 °C und 80 °C durchgeführt werden.

13. Verfahren nach Anspruch 12 **dadurch gekennzeichnet, dass** die wässrige Suspension von feinteiligem Calciumsilikathydrat durch Umsetzung einer wasserlöslichen Kalziumverbindung mit einer wasserlöslichen Silikatverbindung erhalten wurde, wobei die Umsetzung der wasserlöslichen Calciumverbindung mit der wasserlöslichen Silikatverbindung in Anwesenheit einer wässrigen Lösung erfolgt, welche bevorzugt ein wasserlösliches, sich als Fließmittel für hydraulische Bindemittel eignendes Kammpolymer enthält.

14. Verfahren nach Anspruch 12 oder 13, **dadurch gekennzeichnet, dass** sich ein Verfahrensschritt c) anschließt, welcher das Vermahlen der getrockneten Produkte aus dem Verfahrensschritt b) zu Pulvern umfasst.

15. Verwendung von Zusammensetzungen gemäß einem der Ansprüche 1 bis 11 als Erhärtungsbeschleuniger in Zement, Hüttensand, Flugasche, Silikastaub, Metakaolin, natürliche Puzzolane, gebrannte Ölschiefer und/oder Calcium-Aluminat-Zement enthaltenden Baustoffmischungen oder in Baustoffmischungen enthaltend Zement und auf Calciumsulfat basierende Bindemittel, bevorzugt in Baustoffmischungen, welche als hydraulisches Bindemittel im wesentlichen Zement enthalten.

16. Verwendung von Zusammensetzungen gemäß einem der Ansprüche 1 bis 11 als Mahlhilfsmittel bei der Herstellung von Zement.

17. Baustoffmischungen enthaltend Zusammensetzungen gemäß einem der Ansprüche 1 bis 11 und (Portland)zement, Hüttensand, Flugasche, Silikastaub, Metakaolin, natürliche Puzzolane, gebrannte Ölschiefer und/oder Calcium-Aluminat-Zement, oder Baustoffmischungen enthaltend Zusammensetzungen gemäß einem der Ansprüche 1 bis 11, Zement und auf Calciumsulfat basierende Bindemittel, bevorzugt Baustoffmischungen, welche als hydraulisches Bindemittel im wesentlichen Zement enthalten.

## Claims

1. Solid composition comprising calcium silicate hydrate and at least one water-swellable polymer which can form a hydrogel.

2. Composition according to Claim 1, wherein the weight ratio of the water-swellable polymer which can form a hydrogel to the calcium silicate hydrate is from 1:10 to 3:1.

3. Composition according to Claim 1 or 2, wherein the water-swellable polymer which can form a hydrogel is selected from the group of
α) anionic crosslinked polyelectrolytes,
β) cationic crosslinked polyelectrolytes,
γ) ampholytic crosslinked polyelectrolytes and/or
δ) nonionic crosslinked polymers, preferably nonionic crosslinked polymers from free-radical polymerization.

4. Composition according to Claim 3, **characterized in that** sulpho-containing structural units of the general formula (I) are present in the anionic crosslinked polyelectrolytes α), preferably in an amount of 5 to 99.99 mol%, more preferably 20 to 80 mol%, 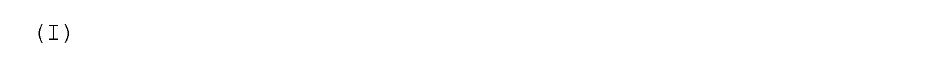 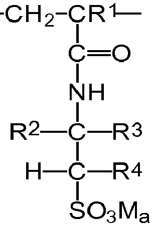 in which
R¹ is identical or different and is represented by hydrogen and/or a methyl radical,
R², R³, R⁴ are each the same or different and are each independently represented by hydrogen, an aliphatic branched or unbranched hydrocarbyl radical having 1 to 6 carbon atoms and/or aromatic hydrocarbyl radical having 6 to 14 carbon atoms,
M is the same or different and is represented by hydrogen, a mono- or divalent metal cation and/or an ammonium ion,
a is the same or different and is represented by 1/2 and/or 1.

5. Composition according to Claim 3, **characterized in that** cationic structural units which have a quaternized nitrogen atom and are of the general formula (II) are present in the cationic crosslinked polyelectrolytes β), preferably in an amount of 5 to 99.99 mol%, more preferably 20 to 80 mol%, 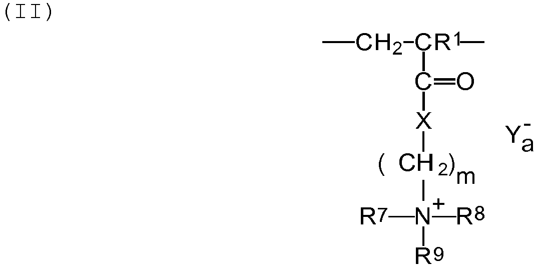 in which
R¹ is identical or different and is represented by hydrogen and/or a methyl radical,
R⁷, R⁸, R⁹, R¹⁰
are each the same or different and are each independently represented by hydrogen, a branched or unbranched aliphatic hydrocarbyl radical having 1 to 20 carbon atoms, a cycloaliphatic hydrocarbyl radical having 5 to 8 carbon atoms and/or an aryl radical having 6 to 14 carbon atoms,
m is the same or different and is represented by an integer from 1 to 6,
X is the same or different and is represented by oxygen and/or N-R¹⁰,
Y -ₐ is the same or different and is represented by a halide, C₁-C₄-alkylsulphate, C₁-C₄-alkylsulphonate and/or sulphate,
a is the same or different and is represented by 1/2 and/or 1.

6. Composition according to Claim 3, **characterized in that** sulpho-containing structural units of the general formula (I) and cationic structural units which have a quaternized nitrogen atom and are of the general formula (II) are present in the γ) ampholytic crosslinked polyelectrolytes.

7. Composition according to any of Claims 4 to 6, **characterized in that** (meth)acrylamido-containing structural units of the general formula (III) are present in the α) anionic crosslinked polyelectrolytes, in the β) cationic crosslinked polyelectrolytes and/or γ) in the ampholytic crosslinked polyelectrolytes, preferably in an amount of 30 to 94 mol%, 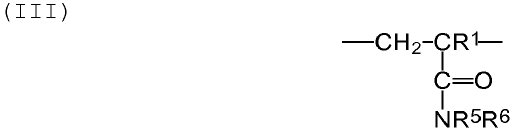 in which
R¹ is as defined above,
R⁵ and R⁶ are each the same or different and are each independently represented by hydrogen, a branched or unbranched aliphatic hydrocarbyl radical having 1 to 20 carbon atoms, a cycloaliphatic hydrocarbyl radical having 5 to 8 carbon atoms and/or an aryl radical having 6 to 14 carbon atoms.

8. Composition according to Claim 3, **characterized in that** the δ) nonionic crosslinked polymers which can form a hydrogel contain (meth)acrylamido-containing structural units of the general formula (III).

9. Composition according to any of Claims 1 to 8, **characterized in that** the water-swellable polymer which can form a hydrogel contains structural units which derive from monomers which have only one free-radically polymerizable, ethylenically unsaturated vinyl group, and crosslinking structural units which derive from monomers which have polyethylenically unsaturated vinyl groups.

10. Composition according to Claim 9, **characterized in that** less than 40 mol% of carboxylic monomers, preferably monocarboxylic monomers, is present in the water-swellable polymers, based on the total number of moles of all monomers.

11. Composition according to Claim 9 or 10, **characterized in that** the crosslinking structural units derive from monomers which are hydrolysed at a pH of 9 to 14 in an aqueous environment.

12. Process for producing preferably pulverulent compositions according to any of Claims 1 to 11, wherein the following process steps are carried out:
a) contacting an aqueous suspension, preferably suitable as a setting and hardening accelerator for cementitious binder systems, of calcium silicate hydrate with at least one water-swellable polymer which can form a hydrogel and
b) drying the product from step a) at temperatures below 140°C, preferably at temperatures less than 100°C, especially preferably at temperatures less than 80°C and most preferably at temperatures between 15°C and 80°C.

13. Process according to Claim 12, **characterized in that** the aqueous suspension of fine calcium silicate hydrate has been obtained by reacting a water-soluble calcium compound with a water-soluble silicate compound, the reaction of the water-soluble calcium compound with the water-soluble silicate compound being effected in the presence of an aqueous solution which preferably contains a water-soluble comb polymer which is suitable as a plasticizer for hydraulic binders.

14. Process according to Claim 12 or 13, **characterized in that** there follows a process step c) which comprises the grinding of the dried products from process step b) to powders.

15. Use of compositions according to any of Claims 1 to 11 as a setting accelerator in building material mixtures comprising cement, slag sand, fly ash, silica dust, metakaolin, natural pozzolans, burnt oil shale and/or calcium aluminate cement, or in building material mixtures containing cement and binders based on calcium sulphate, preferably in building material mixtures which contain essentially cement as a hydraulic binder.

16. Use of compositions according to any of Claims 1 to 11 as a grinding aid in the preparation of cement.

17. Building material mixtures containing compositions according to any of Claims 1 to 11 and (portland) cement, slag sand, fly ash, silica dust, metakaolin, natural pozzolans, burnt oil shale and/or calcium aluminate cement, or building material mixtures containing compositions according to any of Claims 1 to 11, cement and binders based on calcium sulphate, preferably building material mixtures which contain essentially cement as a hydraulic binder.

## Revendications

1. Composition solide contenant du silicate de calcium hydraté et au moins un polymère gonflant dans l'eau, qui peut former un hydrogel.

2. Composition selon la revendication 1, dans laquelle le rapport en poids entre le polymère gonflant dans l'eau qui peut former un hydrogel et le silicate de calcium hydraté est de 1:10 à 3:1.

3. Composition selon la revendication 1 ou 2, dans laquelle le polymère gonflant dans l'eau qui peut former un hydrogel est choisi dans le groupe constitué par :
α) les polyélectrolytes réticulés anioniques,
β) les polyélectrolytes réticulés cationiques,
γ) les polyélectrolytes réticulés ampholytiques et/ou
δ) les polymères réticulés non ioniques, de préférence les polymères réticulés non ioniques issus d'une polymérisation radicalaire.

4. Composition selon la revendication 3, **caractérisée en ce que** les polyélectrolytes réticulés anioniques α) contiennent des unités structurales contenant des groupes acide sulfonique de formule générale (I), de préférence en une quantité de 5 à 99,99 % en moles, de manière particulièrement préférée de 20 à 80 % en moles, 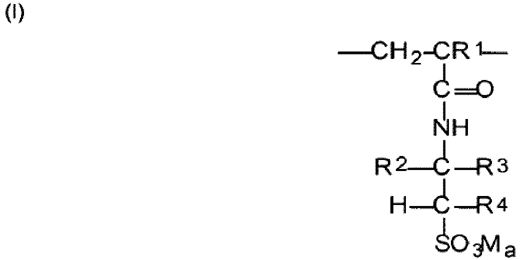 dans laquelle
les R¹ sont identiques ou différents et représentent l'hydrogène et/ou un radical méthyle,
les R², R³, R⁴ sont chacun identiques ou différents et représentent chacun indépendamment les uns des autres l'hydrogène, un radical hydrocarboné aliphatique, ramifié ou non ramifié, de 1 à 6 atomes C, et/ou un radical hydrocarboné aromatique de 6 à 14 atomes C,
les M sont identiques ou différents et représentent l'hydrogène, un cation métallique mono- ou bivalent et/ou un ion ammonium,
les a sont identiques ou différents et représentent 1/2 et/ou 1.

5. Composition selon la revendication 3, **caractérisée en ce que** les polyélectrolytes réticulés cationiques β) contiennent des unités structurales cationiques, comprenant un atome d'azote quaternisé, de formule générale (II), de préférence en une quantité de 5 à 99,99 % en moles, de manière particulièrement préférée de 20 à 80 % en moles 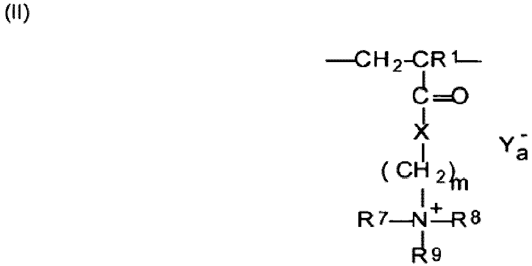 dans laquelle
les R¹ sont identiques ou différents et représentent l'hydrogène et/ou un radical méthyle,
les R⁷, R⁸, R⁹, R¹⁰ sont chacun identiques ou différents et représentent chacun indépendamment les uns des autres l'hydrogène, un radical hydrocarboné aliphatique ramifié ou non ramifié de 1 à 20 atomes C, un radical hydrocarboné cycloaliphatique de 5 à 8 atomes C et/ou un radical aryle de 6 à 14 atomes C,
les m sont identiques ou différents et représentent un nombre entier de 1 à 6,
les X sont identiques ou différents et représentent l'oxygène et/ou N-R¹⁰,
les Y⁻ₐ sont identiques ou différents et représentent un halogénure, un sulfate d'alkyle en C₁ à C₄, un sulfonate d'alkyle en C₁ à C₄ et/ou un sulfate,
les a sont identiques ou différents et représentent 1/2 et/ou 1.

6. Composition selon la revendication 3, **caractérisée en ce que** les polyélectrolytes réticulés ampholytiques γ) contiennent des unités structurales contenant des groupes acide sulfonique de formule générale (I) et des unités structurales cationiques comprenant un atome d'azote quaternisé de formule générale (II).

7. Composition selon l'une quelconque des revendications 4 à 6, **caractérisée en ce que** les polyélectrolytes réticulés anioniques α), les polyélectrolytes réticulés cationiques β) et/ou les polyélectrolytes réticulés ampholytiques γ) contiennent des unités structurales contenant des groupes (méth)acrylamido de formule générale (III), de préférence en une quantité de 30 à 94 % en moles, 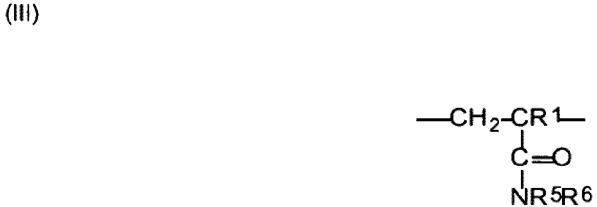 dans laquelle
les R¹ ont la signification indiquée précédemment,
les R⁵ et R⁶ sont chacun identiques ou différents et représentent chacun indépendamment les uns des autres l'hydrogène, un radical hydrocarboné aliphatique ramifié ou non ramifié de 1 à 20 atomes C, un radical hydrocarboné cycloaliphatique de 5 à 8 atomes C et/ou un radical aryle de 6 à 14 atomes C.

8. Composition selon la revendication 3, **caractérisé en ce que** les polymères réticulés non ioniques δ) qui peuvent former un hydrogel contiennent des unités structurales contenant des groupes (méth)acrylamido de formule générale (III).

9. Composition selon l'une quelconque des revendications 1 à 8, **caractérisé en ce que** le polymère gonflant dans l'eau qui peut former un hydrogel contient des unités structurales qui dérivent de monomères qui comprennent uniquement un groupe vinyle éthyléniquement insaturé polymérisable par voie radicalaire et des unités structurales réticulantes qui dérivent de monomères qui comprennent des groupes vinyle polyéthyléniquement insaturés.

10. Composition selon la revendication 9, **caractérisée en ce que** les polymères gonflant dans l'eau contiennent, par rapport au nombre de moles total de tous les monomères, moins de 40 % en moles de monomères carboxyliques, de préférence de monomères monocarboxyliques.

11. Composition selon la revendication 9 ou 10, **caractérisée en ce que** les unités structurales réticulantes dérivent de monomères qui sont hydrolysés en milieu aqueux à un pH de 9 à 14.

12. Procédé de fabrication de compositions, de préférence sous forme de poudre, selon l'une quelconque des revendications 1 à 11, selon lequel les étapes de procédé suivantes :
a) la mise en contact d'une suspension aqueuse, de préférence appropriée en tant qu'accélérateur de prise et de durcissement pour systèmes de liants contenant du ciment, de silicate de calcium hydraté avec au moins un polymère gonflant dans l'eau qui peut former un hydrogel, et
b) le séchage du produit de l'étape a) à des températures inférieures à 140 °C, de préférence à des températures inférieures à 100 °C, de manière particulièrement préférée à des températures inférieures à 80 °C et de manière préférée entre toutes à des températures comprises entre 15 °C et 80 °C, sont réalisées.

13. Procédé selon la revendication 12, **caractérisé en ce que** la suspension aqueuse de silicate de calcium hydraté finement divisé a été obtenue par mise en réaction d'un composé de calcium soluble dans l'eau avec un composé de silicate soluble dans l'eau, la mise en réaction du composé de calcium soluble dans l'eau avec le composé de silicate soluble dans l'eau ayant lieu en présence d'une solution aqueuse, qui contient de préférence un polymère en peigne soluble dans l'eau, approprié en tant que fluidifiant pour liants hydrauliques.

14. Procédé selon la revendication 12 ou 13, **caractérisé en ce qu'**une étape de procédé c) s'ensuit, qui comprend le broyage des produits séchés de l'étape de procédé b) en poudres.

15. Utilisation de compositions selon l'une quelconque des revendications 1 à 11 en tant qu'accélérateur de durcissement dans des mélanges de construction contenant du ciment, du laitier granulé, des cendres volantes, de la poussière de silice, du métakaolin, de la pouzzolane naturelle, du schiste bitumineux calciné et/ou du ciment d'aluminate de calcium ou dans des mélanges de construction contenant du ciment et des liants à base de sulfate de calcium, de préférence dans des mélanges de construction qui contiennent essentiellement du ciment en tant que liant hydraulique.

16. Utilisation de compositions selon l'une quelconque des revendications 1 à 11 en tant qu'adjuvant de broyage lors de la fabrication de ciment.

17. Mélanges de construction contenant des compositions selon l'une quelconque des revendications 1 à 11 et du ciment (de Portland), du laitier granulé, des cendres volantes, de la poussière de silice, du métakaolin, de la pouzzolane naturelle, du schiste bitumineux calciné et/ou du ciment d'aluminate de calcium, ou mélanges de construction contenant des compositions selon l'une quelconque des revendications 1 à 11, du ciment et des liants à base de sulfate de calcium, de préférence mélanges de construction contenant essentiellement du ciment en tant que liant hydraulique.
